(19) Europäisches Patentamt

European Patent Office

Office européen des brevets

(11) **EP 4 715 690 A1**

(12) **EUROPEAN PATENT APPLICATION**

(43) Date of publication:
25.03.2026 Bulletin 2026/13

(21) Application number: 24306549.7

(22) Date of filing: 20.09.2024

(51) International Patent Classification (IPC):
**G06N 10/40** (2022.01)    **G06N 10/20** (2022.01)
**G06N 10/60** (2022.01)

(52) Cooperative Patent Classification (CPC):
**G06N 10/40; G06N 10/20; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Pasqal
91300 Massy (FR)**

(72) Inventors:
• **Albrecht, Boris
91300 Massy (FR)**
• **Ortiz, Luis
91300 Massy (FR)**
• **Signoles, Adrien
91300 Massy (FR)**

(74) Representative: **De Vries & Metman
Overschiestraat 180
1062 XK Amsterdam (NL)**

(54) **ALIGNMENT METHOD AND SYSTEM**

(57)    Systems and methods are disclosed for determining interaction parameters for multiple particles, each particle having a ground state, an excited state, and one or more intermediate states. The multiple particles are configured to interact with a plurality of electromagnetic fields associated with a (different) transition between two states. The method comprises performing a spectroscopy measurement, measuring an effective Rabi frequency $\Omega_{\text{eff}}$, measuring a single-photon Ramsey frequency $\Omega_i^{\text{R}}$, and determining the interaction parameters based on the measured effective detuning $\delta_{\text{eff}}$, the measured effective Rabi frequency $\Omega_{\text{eff}}$, and the measured single-photon Ramsey frequencies $\Omega_i^{\text{R}}$. The interaction parameters may be determined for each of the multiple particles. The interaction parameters may comprise a single-photon Rabi frequency $\Omega_i$ for each electromagnetic field, which may be used to align the electromagnetic fields with respect to the particles.

EP 4 715 690 A1

**(Cont. next page)**

302 — providing an array with particles, e.g., atoms

304 — perform spectroscopy measurement

306 — measure effective Rabi frequency $\Omega_{eff}$

308 — measure $N$ single-photon Ramsey frequencies $\Omega_i^R$

310 — adjust electromagnetic field(s), e.g., laser alignment

# Fig. 3

**Description**

<u>Technical field</u>

This disclosure relates to determining light-matter interaction parameters for multiple particles with a plurality of electromagnetic fields, and in particular, though not exclusively, to methods and systems for precisely aligning Rydberg excitation lasers in a multi-photon transition scheme based on such light-matter interaction parameters, and to a computer program product enabling a hybrid classical quantum computer system to perform such methods.

<u>Background</u>

The concept of using Rydberg states to generate entanglement in pairs of atoms at distances very large with respect to the atomic scale, on the order of microns, was introduced over two decades ago.

Excitation of an atom to a Rydberg state shifts the energies of the corresponding Rydberg states of nearby atoms, by an amount greater than the excitation linewidth. This means that the quantum evolution of one atom can be controlled by the quantum state of another atom, which may be several microns away. This process can be performed coherently and with high fidelity, and forms the basis of a practical means of entanglement of neutral atoms, and therefore a promising platform for quantum computing.

In Rubidium, the wavelength of the (direct) transition from the ground state, (for example $5S_{1/2}$), to the Rydberg states with high principal quantum number (for example, $n = 60$) is close to 297 nm. A laser source operating at this wavelength must fulfil two requirements: due to the limited lifetime of the Rydberg states (~100 $\mu$s) the targeted Rabi frequencies are greater than2 MHz to avoid decoherence effects but, at the same time, considering the size of the (typically) two-dimensional atomic arrays, the laser waists we are aiming for are ~100 $\mu$m. The required laser power is, thus, in the range of ~1 W, to fulfil these conditions. However, single-mode highly coherent lasers delivering such power are not common, even though its implementation has been demonstrated in optical lattices. Moreover, there are limited optical components available for UV light. A solution to avoid this wavelength is to use a multi-photon transition to reach the Rydberg states. For example, H.J. Levine, Quantum information processing and quantum simulation with programmable Rydberg atom arrays (Doctoral dissertation, Harvard University Graduate School of Arts and Sciences) describes the option of using a two-photon transition with a 420 nm laser (blue) and a 1013 nm laser (near infrared). This option allows to have a high intensity enabling high Rabi frequencies on the atoms with a limited waist size. These lasers will be referred to as the Rydberg lasers.

There are two drawbacks associated to the use of multi-photon transitions compared to single-photon transitions: the plurality of lasers must be locked in phase, or have a long enough coherence time, in order to coherently drive the Rydberg excitation, and as the intermediate state has a shorter lifetime than the typical Rabi oscillation period, the particles may decay to the ground state with a non-zero probability instead of going to the Rydberg state. For example, the lifetime of the intermediate level in the two-laser setup described above is $\tau_{6P} = 113$ ns, corresponding to a linewidth $\Gamma_{6P} = 2\pi \times 1.2$ MHz. The Rabi oscillation is the cyclic behaviour of the population of a two-level quantum system in the presence of an oscillatory driving field (such as the Rydberg lasers). The frequency of these Rabi oscillations depends on the intensity of the lasers. In the specific case of a two-photon transition, this frequency is defined as the effective Rabi frequency, $\Omega_{eff}$, and depends on the detuning $\Delta$ relative to the intermediate state, and on two single-photon Rabi frequencies:

$$\Omega_{eff} = \frac{\Omega_b \, \Omega_r}{2\Delta}.$$

Here, $\Omega_r$ refers to the (single-photon) Rabi frequency of the 1013 nm (or 'red') laser, and $\Omega_b$ to the Rabi frequency for the 420 nm (or 'blue') laser.

As the Rabi frequency depends on the laser intensity, maximizing the Rabi frequency corresponds to maximizing the laser intensity. Consequently, known alignment methods of the Rydberg lasers are based on maximizing the effective Rabi frequency. However, the effective Rabi frequency depends on both individual laser frequencies, which makes it non-trivial to extract the misalignment of the individual lasers.

There is therefore a need in the art for a method for precise alignment of the Rydberg laser beams, independently, for each of two directions orthogonal to the propagation axis of the beams.

<u>Summary</u>

It is an aim of embodiments in this disclosure to provide a system and method for determining interaction parameters for multiple particles with a plurality of electromagnetic fields, that avoids, or at least reduces the drawbacks of the prior art. The interaction parameters may be used for aligning Rydberg excitation lasers.

In an aspect, embodiments in this disclosure relate to a method for determining interaction parameters for multiple particles. Each of the multiple particles is associated with a plurality of states, the plurality of states comprising a ground state, an excited state, and one or more intermediate states. The multiple particles are configured to interact with a plurality of electromagnetic fields, and each of the electromagnetic fields is associated with a (different) transition between two states from the plurality of states. The method comprises performing a spectroscopy measurement, measuring an effective Rabi frequency $\Omega_{\text{eff}}$, measuring a single-photon Ramsey frequency $\Omega_i^{\text{R}}$, and determining the interaction parameters based on the measured effective detuning $\delta_{\text{eff}}$, the measured effective Rabi frequency $\Omega_{\text{eff}}$, and the measured single-photon Ramsey frequencies $\Omega_i^{\text{R}}$. The interaction parameters may be determined for each of the multiple particles. The interaction parameters may comprise a bare detuning $\delta_{\text{bare}}$ and/or a Rabi frequency $\Omega_i$ for each electromagnetic field. The single-photon Ramsey frequency may be determined for each electromagnetic field, or for all electromagnetic fields except one electromagnetic field.

Performing a spectroscopy measurement may comprise scanning a frequency of at least one of the one or more electromagnetic fields to determine an effective detuning $\delta_{\text{eff}}$.

Measuring an effective Rabi frequency $\Omega_{\text{eff}}$ may comprise scanning a pulse duration of a pulse applied to the particles using the plurality of electromagnetic fields.

Measuring a single-photon Ramsey frequency $\Omega_i^{\text{R}}$ may comprise scanning a free-precession duration $\tau_i^{\text{FP}}$.

The plurality of states may be ordered based on an energy level associated with each of the states, the ground state having the lowest energy level and the excited state having the highest energy level. Each of the electromagnetic fields is associated with a transition between two subsequent states; i.e., the photons of the electromagnetic field have an energy that is approximately equal to the energy difference between the two subsequent states. The plurality of electromagnetic fields may be lasers, microwave bundles, or the like. At least one of the electromagnetic fields may have a tuneable wavelength.

The Rabi oscillation (also referred to as the Rabi flop) is the cyclic behaviour of a population of a two-level quantum system in the presence of an oscillatory driving field. When a multi-photon transition is realized by applying a pulse with a plurality of electromagnetic fields (correctly oriented on the atoms), depending on the effective pulse duration, the population of atoms transits from the ground state to the Rydberg state and then back, a few or several times. The frequency of these Rabi oscillation is the Rabi frequency and depends on the intensity of the electromagnetic fields.

The effective detuning $\delta_{\text{eff}}$ depends on a bare atom detuning $\delta_{\text{bare}}$ and on the Rabi frequencies $\Omega_i$ of all (individual) electromagnetic fields; the effective Rabi frequency and the single-photon Ramsey frequencies $\Omega_i^{\text{R}}$ depend on the Rabi frequencies $\Omega_i$ of all (individual) electromagnetic fields. Hence, there are $N + 1$ unknowns, where $N$ is the number of electromagnetic fields, which may be solved for using the effective detuning and N single-photon Ramsey frequencies; or using the effective detuning, the effective Rabi frequency, and N - 1 single-photon Ramsey frequencies.

Thus, by determining the interaction parameters, and in particular the single-photon Rabi frequencies (or a quantity from which these may be derived or estimated), the electromagnetic fields may be aligned. If the particles are essentially in the same plane, this alignment may take place, for example, in a direction parallel to the plane and/or in a direction perpendicular to the plane. If the particles are used as a quantum register in a quantum processing unit, having well-aligned electromagnetic fields increases the efficiency of the computations.

In an embodiment, the method further comprises adjusting the frequency of the at least one of the plurality of electromagnetic fields based on the determined effective detuning $\delta_{\text{eff}}$ for each of the multiple particles, such that an average $\langle\delta_{\text{eff}}\rangle$ of the effective detunings $\delta_{\text{eff}}$ for the multiple particles is substantially zero, prior to the measuring of the Rabi frequency.

Decreasing the (absolute value of the) average effective detuning increases the transition probability of the particles.

In an embodiment, the method further comprises, after measuring the effective Rabi frequency $\Omega_{\text{eff}}$, repeating the spectroscopy measurement using a pulse length based on the measured effective Rabi frequency $\Omega_{\text{eff}}$ to obtain an improved effective detuning. Optionally, the method further comprises adjusting the frequency of the at least one of the plurality of electromagnetic fields such that an average $\langle\delta_{\text{eff}}\rangle$ of the improved effective detunings $\delta_{\text{eff}}$ for the multiple particles is substantially zero and repeating the effective Rabi frequency measurement.

The determined value for the effective detuning may depend on the pulse duration used during the spectroscopy measurement. By using a pulse length that is based on the effective Rabi frequency, a more accurate value for the effective detuning may be obtained.

In an embodiment, a $\pi/2$-pulse duration $\tau_{\pi/2}$ for measuring the single-photon Ramsey frequencies $\Omega_i^{\text{R}}$ is substantially equal to a one divided by four times an average $\langle\Omega_{\text{eff}}\rangle$ of the effective Rabi frequencies for the multiple particles. In other words, $\tau_{\pi/2}$ is substantially equal to $1/(4\langle\Omega_{\mathrm{eff}}\rangle)$.

In an embodiment, the method further comprises aligning at least one of the plurality of electromagnetic fields based on the determined interaction parameters, in particular based on the interaction parameters determined with respect to electromagnetic field being aligned. For example, a single-photon Rabi frequency associated with a given electromagnetic field of the plurality of electromagnetic fields may be determined, and the given electromagnetic field may be aligned based on the associated single-photon Rabi frequency. The single-photon Rabi frequency may be averaged over one or more groups of particles of the multiple particles. For example, an average single-photon Rabi frequency may be determined, typically averaged over all particles, and the associated electromagnetic field may be aligned based on the average single-photon Rabi frequency. Such a procedure may be used, for instance, to align the electromagnetic field in a direction perpendicular to a plane defined by the plurality of particles.

In an embodiment, aligning the at least one of the plurality of electromagnetic fields based on the determined interaction parameters comprises fitting a profile associated with the at least one electromagnetic field to a distribution, e.g. a heatmap, of interaction parameters associated with the at least one electromagnetic field, and aligning the at least one electromagnetic field based on the fitted profile.

For example, a heatmap of the Rabi frequency associated with the given electromagnetic field may be determined, and a known intensity profile (e.g., a Gaussian profile) of the given electromagnetic field (e.g., a laser beam) may be fitted to the heatmap. The given electromagnetic field may then be aligned based on a comparison of the fit with an expected or desired distribution. This can be particularly useful when aligning the electromagnetic field in a direction in a plane defined by the plurality of particles, which may be referred to as a lateral alignment.

In an embodiment, determining an interaction parameter associated with a given electromagnetic field comprises causing a field strength of the given electromagnetic field interacting with the multiple particles to be much larger, e.g., at least a factor of 5, 10, or 20, than a field strength of any of the plurality of electromagnetic fields other than the given electromagnetic field. The field strength may also be referred to as the intensity. The field strength may be adjusted by adjusting a power of the electromagnetic field source, or by e.g. placing or removing filters (in the beam between the source and the particles) that affect the field strength at the location of the particles. As the Rabi frequency is proportional to the amplitude of the electromagnetic field, causing the amplitude of the given electromagnetic field to be dominant (substantially larger than the amplitudes od the other electromagnetic fields) ensures that the effective Rabi frequency is dominated by the Rabi frequency of the given electromagnetic field. Hence, the effective Rabi frequency, or a measure derived thereof such as an average or a profile, may be used to approximate the single-photon Rabi frequency (and hence relative intensity) of the given electromagnetic field. This information may be used to align the given electromagnetic field with the multiple particles.

In an embodiment, the particles are atoms, e.g., neutral atoms in an array of optical dipole traps.

In a further aspect, embodiments in this disclosure relate to a controller for a quantum system. The controller may be configured to perform any of the method steps described herein. In particular, the quantum system may be configured to hold multiple particles, each of the multiple particles being associated with a plurality of states, the plurality of states comprising a ground state, an excited state, and one or more intermediate states. The quantum system can further being configured to generate (e.g., using lasers) a plurality of electromagnetic fields configured to interact with the multiple particles, each of the electromagnetic fields being associated with a transition between two states from the plurality of states, the controller being configured to:

cause the quantum system to perform a spectroscopy measurement by scanning a frequency of at least one of the one or more electromagnetic fields to determine an effective detuning $\delta_{\mathrm{eff}}$ for each of the multiple particles;

cause the quantum system to measure an effective Rabi frequency $\Omega_{\mathrm{eff}}$ for each of the multiple particles by scanning a pulse duration of a pulse applied to the particles using the plurality of electromagnetic fields;

cause the quantum system to measure a single-photon Ramsey frequency $\Omega_i^{\mathrm{R}}$ for each of the multiple particles for at least each electromagnetic field except one electromagnetic field by scanning a free-precession duration $\tau_i^{\mathrm{FP}}$; and

determine the interaction parameters based on the measured effective detuning $\delta_{\mathrm{eff}}$, the measured effective Rabi frequency $\Omega_{\mathrm{eff}}$, and the measured single-photon Ramsey frequencies $\Omega_i^{\mathrm{R}}$, preferably the interaction parameters comprising a bare detuning $\delta_{\mathrm{bare}}$ and a Rabi frequency $\Omega_i$ for each electromagnetic field.

In a further aspect, embodiments in this disclosure relate to a quantum system, such as a quantum processor, the quantum system being configured to hold multiple particles, each of the multiple particles being associated with a plurality of states, the plurality of states comprising a ground state, an excited state, and one or more intermediate states, the quantum system further being configured to generate a plurality of electromagnetic fields configured to interact with the multiple particles, each of the electromagnetic fields being associated with a transition between two states from the plurality of states, the quantum system being communicatively connected to a controller, the quantum system being configured to: obtain spectroscopy measurement data by scanning a frequency of at least one of the one or more electromagnetic fields and provide the spectroscopy measurement data to the controller; obtain effective Rabi frequency data for each of the multiple particles by scanning a pulse duration of a pulse applied to the particles using the plurality of electromagnetic fields and provide the effective Rabi frequency data to the controller; obtain single-photon Ramsey frequency data for each of the multiple particles for at least each electromagnetic field except one electromagnetic field by scanning a free-precession duration and provide the single-photon Ramsey frequency data to the controller; receive alignment information from the controller; and align at least one of the electromagnetic fields with respect to the multiple particles.

One aspect of this disclosure relates to a computer, e.g., the above-mentioned controller, comprising a computer readable storage medium having computer readable program code embodied therewith, and a processor, preferably a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a computer system or a hybrid quantum computer system, being configured for executing any of the methods described herein.

One aspect of this disclosure relates to a non-transitory computer-readable storage medium storing at least one software code portion, the software code portion, when executed or processed by a computer or hybrid quantum computer system, is configured to perform any of the methods described herein.

The flowcharts and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

Brief description of the drawings

The embodiments will be further illustrated with reference to the attached schematic drawings, in which:

**Fig. 1A** schematically depicts a system according to an embodiment and **Fig. 1B** schematically depicts an array of atoms in an electromagnetic field;

**Fig. 2A-C** depict examples of states of a particle that may be used in a quantum register according to an embodiment;

**Fig. 3** is a flowchart of a method according to an embodiment;

**Fig. 4A** schematically depicts a method for performing a spectroscopy measurement, **Fig. 4B** shows an example of a spectroscopy pulse, and **Fig. 4C** shows an example of a spectroscopy measurement;

**Fig. 5A** schematically depicts a method for measuring an effective Rabi frequency, and **Fig. 5B** shows an example of an effective Rabi measurement pulse;

**Fig. 6A** schematically depicts a method for measuring a single-photon Ramsey frequency, and **Fig. 6B** shows an example of a single-photon Ramsey measurement pulse;

**Fig. 7A** depicts a heatmap of the relative laser intensity and **Fig. 7B** shows an analysis of the heatmap;

**Fig. 8** is a flowchart of a method according to an embodiment;

**Fig. 9** is a flowchart of a method according to an embodiment;

**Fig. 10** schematically depicts a hardware-level schematics illustrating the application of logical operations to qubits using a quantum circuit; and

**Fig. 11A** and **11B** are block diagrams illustrating, respectively, an exemplary hybrid data processing system and an exemplary classical data processing system that may be used for executing methods and software products described in this disclosure.

Detailed description

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

Further, unless otherwise specified, terms like "detachable" and "removably connected" are intended to mean that respective parts may be disconnected essentially without damage or destruction of either part, e.g. excluding structures in which the parts are integral (e.g. welded or moulded as one piece), but including structures in which parts are attached by or as mated connectors, fasteners, releasable self-fastening features, etc. The verb "to facilitate" is intended to mean "to make easier and/or less complicated", rather than "to enable".

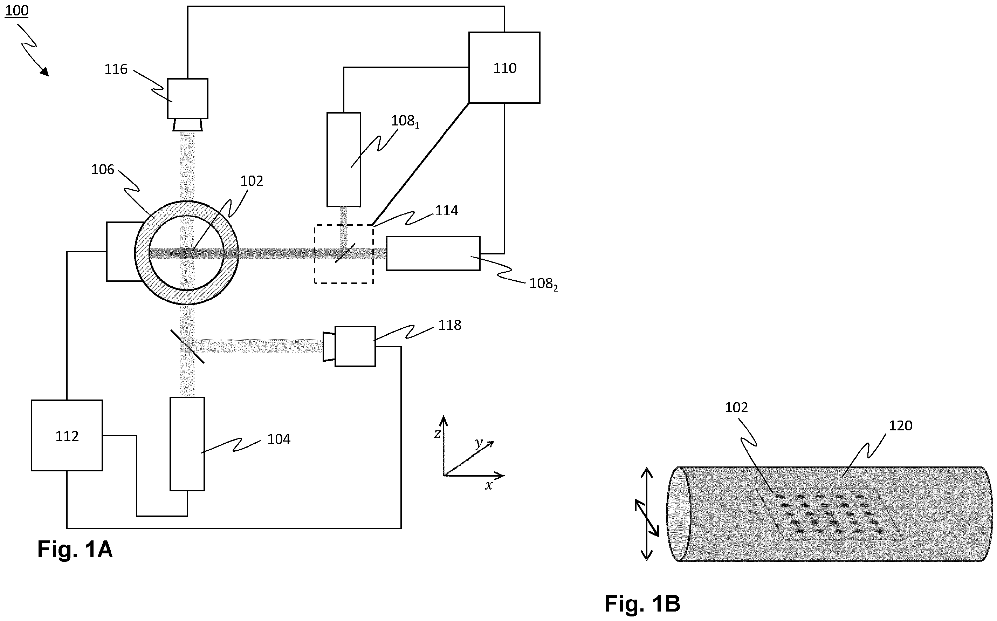

**Fig. 1A** schematically depicts a system employing, and/or for use with, the present concepts. The system **100** may be used for studying and/or manipulating any optically trappable objects **102,** such as atoms, and in particular for performing quantum operations on and/or with such objects, e.g., at least as part of a (hybrid) quantum computer.

The system **100** comprises an optical system **104** for generating a plurality of optical dipole traps in a sample holding system **106.** At least part of the optical system may be arranged inside the sample holder system, which may comprise a vacuum- and/or cryogenic chamber. One or more parts of the system **100** may be connected to one or more controllers **110,112** which may be connected and/or integrated. One or more of the controllers may comprise a memory and may be programmable to perform method steps as disclosed herein. Such memory may also be used to store particular operation settings and/or measurement data. One or more of the controllers may be remote from the optical system and/or be connected via Internet connections.

One or more of the controllers **110,112** may comprise or be comprised in a computer, and/or serve for performing classical operations in combination with quantum operations being performed using objects **102** trapped in the plurality of optical dipole traps, as set out below, as a quantum processing unit (QPU).

The system **100** may comprise a plurality of electromagnetic field sources **108$_{1,2}$,** e.g., lasers or microwave guides, that are configured to interact with the particle array **102,** e.g., in order to perform quantum operations on the particle array. Although in the current example, only two electromagnetic field sources are shown for, e.g., exciting the particles to a Rydberg state, other embodiments may use more electromagnetic fields. For example, the electromagnetic fields may be configured to excite the particles from a ground state to an excited state. An alignment system **114** may be used to align the electromagnetic fields relative to the particle array. A first detection system **116** may determine an occupancy of the optical dipole traps, i.e., determine in which of the plurality of optical dipole traps a particle is present. A second detection system **118** may distinguish between particles in the ground state and particles in the excited state. Either or both of the first and second detection systems may comprise, e.g., a camera.

As shown in **Fig. 1B,** the particle array **102** can be a two-dimensional array in a plane, but other embodiments may use, e.g., a three-dimensional array. In the depicted embodiment, the electromagnetic field is a laser beam **120** which is parallel to the plane. The laser beam may be aligned in two different, typically mutually perpendicular, directions, e.g., a direction parallel to the plane and in a direction perpendicular to the plane. Such alignment systems may comprise, e.g., movable and/or rotatable mirrors, and are well-known in the art.

An example of such a system **100** is described in more detail in, e.g., WO 2024/013536 A1 (in particular with reference to Fig. 1), which is incorporated by reference herein in its entirety.

Further, the system **100** may comprise (not shown) additional parts such as additional optical systems and/or systems for controllably providing one or more electromagnetic fields for manipulating one or more objects trapped in the optical traps, e.g., per individual object and/or per group(s) of objects.

For example, the system may comprise an array of cold atoms, e.g., neutral atoms, which are usable as a quantum register. An ensemble of atoms may be loaded in a magneto-optical trap and trapped in an array of optical dipole traps (also called optical tweezers), or other suitable traps, to form the array of atoms. When in use, some or all of the optical tweezers may be loaded with atoms. As noted, the first detection system may detect which of the optical tweezers have been loaded with atoms.

To perform a calculation, the atoms are excited using a plurality of electromagnetic fields. For example, the quantum processing unit may have $M$ neutral atoms, where $M$ is an integer larger than 1.

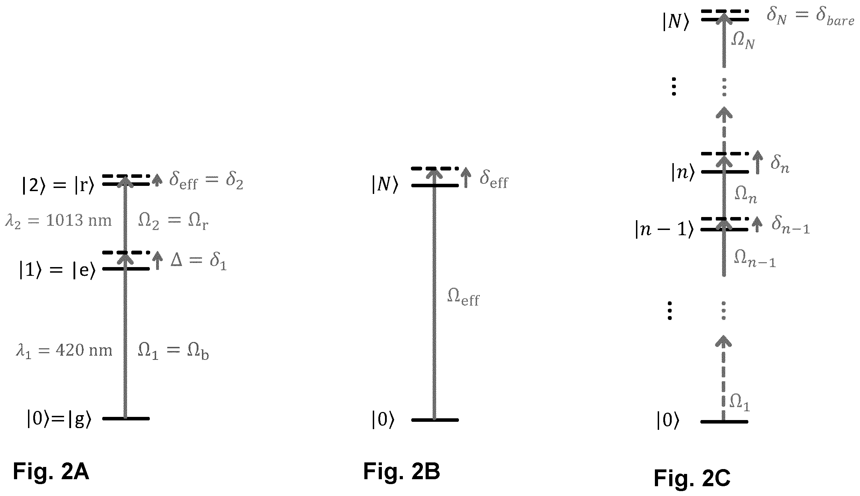

**Fig. 2A** depicts an example of states of a particle, in this case a neutral atom. The particle has a ground state $|g\rangle$, a Rydberg state $|r\rangle$ (also referred to as the excited state), and an intermediate state $|e\rangle$. The atom may be excited using a two-photon process, e.g., using two laser beams with different wavelengths.

As an example, the neutral atom may be a rubidium atom. The wavelength associated with the (direct) transition from the ground state, (for example $5S_{1/2}$), to the Rydberg states with high principal quantum number (for example, $n = 60$) is close to 297 nm. This energy can also be obtained using a two-photon transition, using a first 'blue' laser with a wavelength of 420 nm and a second 'red' laser with a wavelength of 1013 nm: $\frac{1}{420} + \frac{1}{1013} = \frac{1}{297}$ . The blue laser is slightly detuned with an amount $\Delta$ with respect to the intermediate state, e.g. the state $6P_{3/2}$. In this example, the intermediate state has a shorter lifetime than the typical Rabi oscillation period, so that the atom decays to the ground state with a finite probability instead of going to the Rydberg state. The lifetime of the intermediate level is $\tau_{6P}$ = 113 ns, corresponding to a linewidth $\Gamma_{6P}$ = $2\pi \times 1.2$ MHz.

In this example, the excitation may be driven with $\Omega_{eff}/(2\pi) \sim 2$ MHz to avoid decoherence. In order to fulfil this condition and $\Delta \gg \Omega_b$, $\Omega_r \Gamma_{6P}$, the following exemplary values may be used $\Omega_b/(2\pi) \sim 100$ MHz, $\Omega_r/(2\pi) \sim 25$-50 MHz, and $\Delta/(2\pi) \sim 500$-1000 MHz.

The first laser is associated with a first Rabi frequency $\Omega_1$ related to the transition between the ground state and the intermediate state and the second laser is associated with a second Rabi frequency $\Omega_2$ related to the transition between the intermediate state and the excited state.

**Fig. 2C** depicts a more general example of an $(N + 1)$-level system with states labelled $|0\rangle$ (the ground state) through $|N\rangle$ (the Rydberg state), with N transitions corresponding to $N$ photons of $N$ electromagnetic fields. The states $|i\rangle$ have respective energies $\omega_i$, with $\omega_j > \omega_i$ for $j > i$, for $i,j \in \{0, ...,N\}$, i.e., the states are ordered in ascending order by their energy levels. The photons of the electromagnetic fields have energies/frequencies $\{v_i\}_{i=1}^N$, where $v_i$ is associated with the transition between states $|i - 1\rangle$ and $|i\rangle$. More in particular, the energies of the photons approximately correspond to the energy differences between two subsequent states, i.e., $v_i \approx \omega_i - \omega_{i-1}$ for $i \in \{1, ..., N\}$. Each photon is slightly detuned, such that $\delta_i = \omega_i - (\omega_{i-1} + \delta_{i-1}) - v_i \neq 0$ and $\delta_i \ll v_i$.

The single-photon detunings $\{\delta_i\}_{i=1}^N$ are assumed known (as they can be computed based on the bare-atom energy levels and the known EM frequencies). The detunings of the transitions are much larger (typically, at least a factor 5-10) than the Rabi frequencies of the respective transitions, i.e., $\delta_i \gg \Omega_i$.

In the regime where the detuning from the intermediate state(s) is much larger than the single-photon Rabi frequencies, the intermediate state(s) can be adiabatically eliminated and the problem effectively reduces to a two-level system, as shown in **Fig. 2B.** In this case, an effective (multi-photon) Rabi frequency $\Omega_{eff}$ may be determined for the excitation from the ground state $|0\rangle$) to the excited state $|N\rangle$, and a corresponding effective detuning $\delta_{eff}$ may be determined.

These parameters determine the effective Hamiltonian $\mathcal{H}_{eff}$ of each atom in the system, which is given by:

$$\mathcal{H}_{eff} = \frac{\hbar\,\Omega_{eff}}{2} \left(|N\rangle\langle 0| + |0\rangle\langle N|\right) + \hbar\,\delta_{eff}\,|N\rangle\langle N|. \tag{1}$$

As mentioned, these values depend, *inter alia,* on the local intensities (field strengths) of the electromagnetic fields, and must be determined for each individual atom / trap position.

This effective Rabi frequency is defined, for the general case of $N$ transitions ($N \geq 2$), in a compact way as

$$\Omega_{eff} = \frac{\prod_{i=1}^N \Omega_i}{2 D^{(1,\cdots,N-1)}}, \qquad D^{(i,\cdots,j)} = \begin{cases} \delta_i, & i = j \\ 1 & i > j \\ \delta_i D^{(i+1,\cdots,j)} - D^{(i+2,\cdots,j)}|\Omega_{i+1}/2|^2 & i < j \end{cases} \tag{2}$$

For the two-photon case, the effective Rabi frequency depends on the (single-photon) Rabi frequencies $\Omega_b$ and $\Omega_r$ for the blue and red laser, respectively, and is given by :

$$\Omega_{eff} = \frac{\Omega_b\,\Omega_r}{2\Delta} \tag{3}$$

where $\Delta = \delta_1$ is the (known) detuning of the blue laser with respect to the intermediate state.

The effective detuning depends on the 'bare transition' frequency $\delta_{bare}$ and the light shifts $S_0$, $S_N$ produced by the first and last electromagnetic field only:

$$\delta_{eff} = \delta_{bare} + S_1 - S_N \tag{4}$$

When an atomic transition is driven with a non-resonant electromagnetic field, the frequency of the transition is shifted slightly through what is known as the (AC) Stark effect, which affects the energy levels of all states. The frequency shift referred to as a "light shift", which depends on the strength of the coupling (between the electromagnetic field and the transition) and the detuning from the transition.

Both the first and last level light shifts ($S_1$ and $S_N$, respectively) depend on all single-photon Rabi frequencies $\Omega_i$, and on all detunings $\delta_i$. The first light shift $S_1$ has a stronger dependence on the lowest transitions, and the last light shift $S_N$ has a stronger dependence on the highest transitions.

For the general case of $N$ transitions ($N \geq 2$), the first level light shift, $S_1$ may be defined as

$$S_1 = \cfrac{|\Omega_1/2|^2}{\delta_1 - \cfrac{|\Omega_2/2|^2}{\delta_2 - \cfrac{|\Omega_3/2|^2}{\ddots \atop \delta_{N-2} - \cfrac{|\Omega_{N-1}/2|^2}{\delta_{N-1}}}}} \tag{5}$$

One can observe that the denominator develops perturbatively, so it can be rewritten as the recurrence relation.

$$S_1 = \frac{|\Omega_1/2|^2}{D_1}, \quad D_i = \begin{cases} \delta_i - \dfrac{|\Omega_{i+1}/2|^2}{D_{i+1}}, & i = 1, \ldots, N-2 \\[2ex] \delta_i, & i = N-1 \end{cases} \tag{6}$$

Every time, the last term to be introduced in the recurrence relation corresponds to the case where $D_{N-1} = \delta_{N-1}$.

The last level light shift $S_N$ may be defined, for the general case of $N$ transitions ($N \geq 2$), as:

$$S_N = \cfrac{|\Omega_N/2|^2}{\delta_{N-1} - \cfrac{|\Omega_{N-1}/2|^2}{\delta_{N-2} - \cfrac{|\Omega_{N-2}/2|^2}{\ddots \atop \delta_2 - \cfrac{|\Omega_2/2|^2}{\delta_1}}}}, \tag{7}$$

Again, it is more convenient to write the recursive form down for the sake of compactness.

$$S_N = \frac{|\Omega_N/2|^2}{\delta_{N-1} - S_{N-1}}, \quad S_1 = 0 \tag{8}$$

For the specific case of N = 2, the effective detuning depends on the light shifts $\omega_b$ and $\omega_r$ caused by the blue and red lasers, and is given by:

$$\delta_{\text{eff}} = \delta_{\text{bare}} + \omega_b - \omega_r, \quad \text{with } \omega_b = \frac{\Omega_b^2}{4\Delta} \text{ and } \omega_r = \frac{\Omega_r^2}{4\Delta} \tag{9}$$

In general, the (single-photon or multi-photon) Rabi frequency is related to the relevant electromagnetic field intensity via:

$$\Omega = \Gamma \sqrt{\frac{I}{2\,I_{\text{sat}}}} \tag{10}$$

where $\Gamma$ is the (known) fixed excited state linewidth, and $I_{\text{sat}}$ is the (known) fixed saturation intensity. The Rabi frequency can be measured for a given atom (using a series of measurements) by determining the probability that the given atom is in the excited state. As the single-photon Rabi frequency depends on the intensity of the respective electromagnetic field, determination of the Rabi frequency for all atoms can be used to determine the intensity distribution of the electromagnetic field over the atom array, and hence to determine the (mis)alignment of the electromagnetic field.

The (two-dimensional) atom array is illuminated by a red laser beam and a blue laser beam, both within the plane defined by the atom array. The red and blue laser beams may be co-propagating or counter-propagating, but this is not required. Longitudinal misalignment is neglected, so there are two alignment directions, referred to as parallel or II (i.e., within the plane), and perpendicular or $\perp$ (w.r.t the plane). The laser beams have a known, nonhomogeneous profile (which is assumed to be Gaussian). The intensity of the laser beams can be controlled independently.

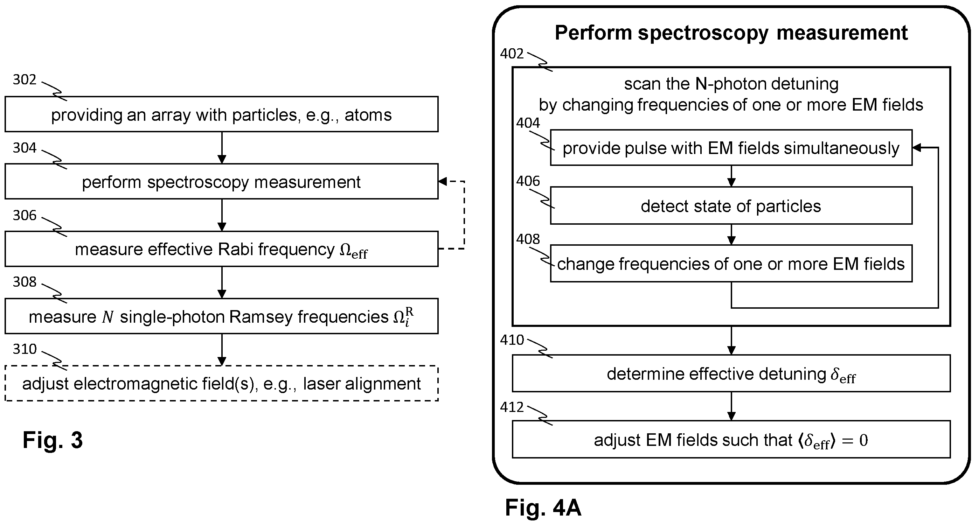

**Fig. 3** is a flowchart of a method according to an embodiment. A first step **302** comprises providing an array with particles. This step may comprise loading the particles into the array. The array can be an optical trap array, e.g., an array of optical tweezers. The array can be a one-dimensional array, a two-dimensional array, or a three-dimensional array. The particles may be atoms, e.g., ions or neutral atoms. The particles in the array may form a quantum register of a quantum processing unit.

Each of the particles is associated with a plurality of states including a ground state, an excited state (e.g., a Rydberg state), and one or more intermediate states. The particle array is configured to interact with a plurality of electromagnetic fields, e.g., lasers. Each of the electromagnetic fields is associated with a transition between two (subsequent) states from the plurality of states. The electromagnetic fields are selected such to enable a multi-photon transition between the ground state and the excited state. These electromagnetic fields do not include 'adjuvant' electromagnetic fields not involved in the transition between ground state and excited state, such as electromagnetic fields used for trapping and/or imaging the particles.

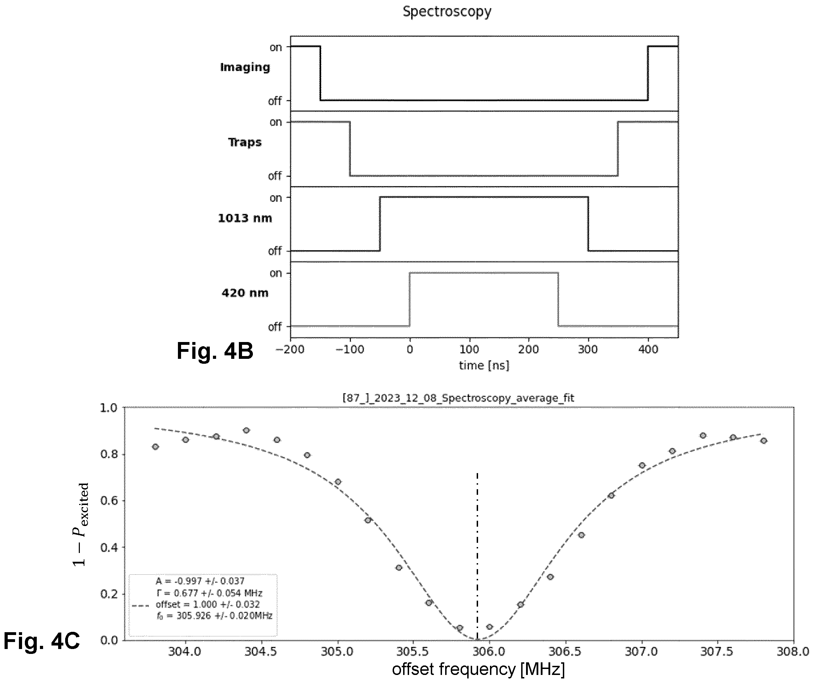

A step **304** comprises performing a spectroscopy measurement of the array with particles. This step comprises determining the effective detuning $\delta_{\text{eff}}$ by changing the energy (wavelength) of at least one of the electromagnetic fields. This step may further comprise selecting the energy (wavelength) of the at least one of the electromagnetic fields such that the average effective detuning is zero, i.e., $\langle \delta_{\text{eff}} \rangle = 0$, where $\langle \cdot \rangle$ denotes an average over the particles in the array. A more detailed description of this step is provided below with reference to **Fig. 4.**

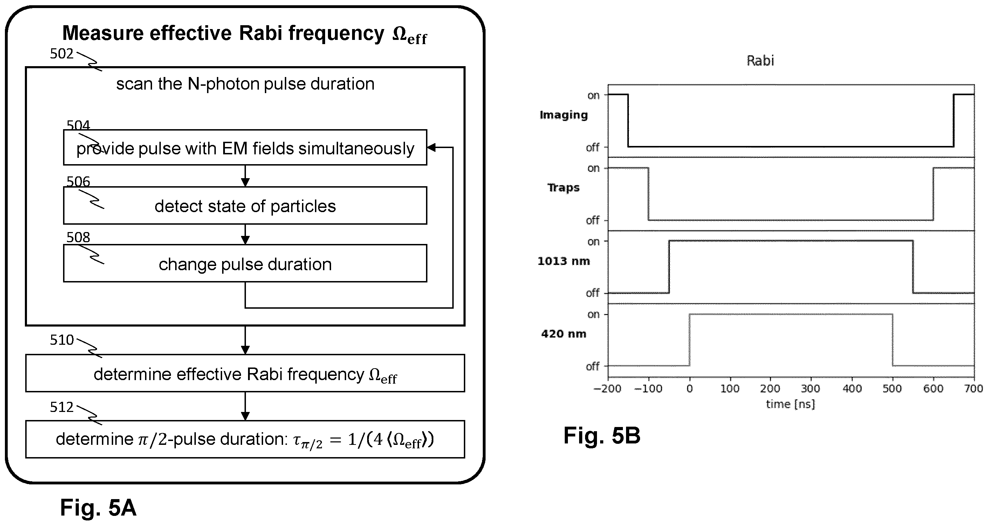

A step **306** comprises measuring the effective (multi-photon) Rabi frequency $\Omega_{\text{eff}}$ for the particles in the particle array. A more detailed description of this step is provided below with reference to **Fig. 5.**

Steps **304** and **306** may be repeated one or more times. In particular, the pulse length used for the spectroscopy measurement may be determined based on the average measured effective Rabi frequency $\langle \Omega_{\text{eff}} \rangle$, which may lead to an 'improved' value for the average effective detuning $\langle \delta_{\text{eff}} \rangle$. This, in turn, may be used to adjust the energy of the at least one of the electromagnetic fields such that $\langle \delta_{\text{eff}} \rangle = 0$ holds for the improved value. Steps **304** and **306** may be repeated as often as necessary, e.g., until a convergence criterion is met.

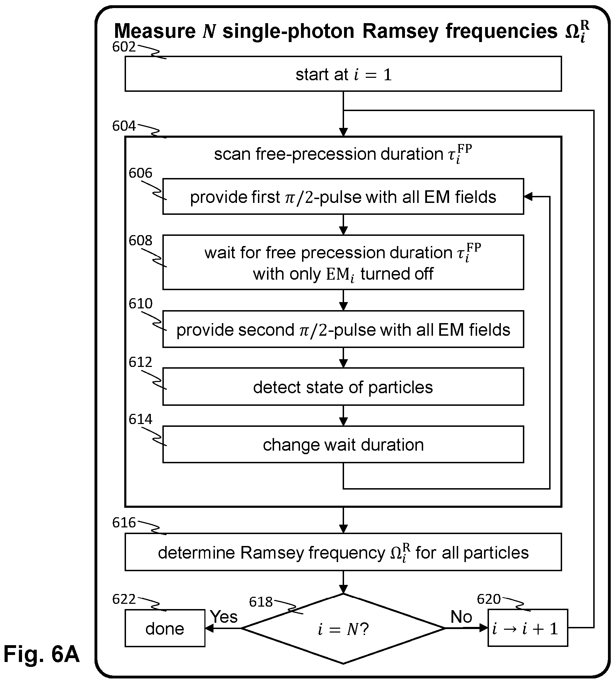

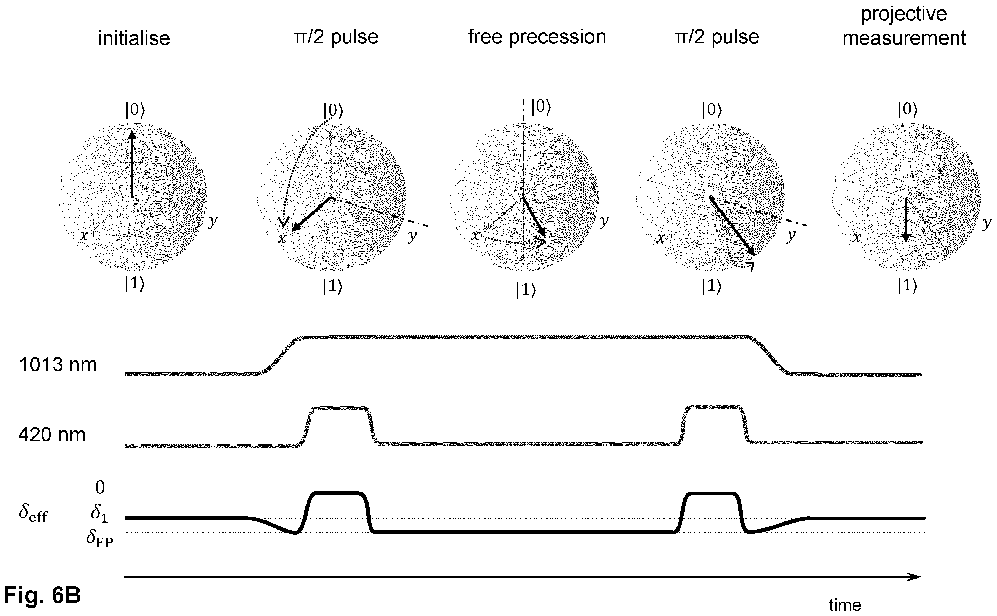

A step **308** comprises measuring the single-photon Ramsey frequency $\Omega_i^{\text{R}}$ for the particles in the particle array. A more detailed description of this step is provided below with reference to **Fig. 6.**

These measurements typically have the same general form: the particles are prepared in the ground state, one or more pulses are applied to all particles in the particle array, and a measurement is performed that allows to determine how many (and/or which) particles are in the ground state and how many (and/or which) particles are in the excited state after the measurement.

In a particular example, all particles (e.g., rubidium atoms) are initialized in the ground state $|g\rangle$, e.g., $|g\rangle = |5S_{1/2}, F = 2, m_F = 2\rangle$. Once the traps (e.g., an array of optical tweezers) forming the trap array are loaded (e.g., from a magneto-optical trap), a laser pulse close to an electronic transition (e.g., the D2 line) allows a fluorescence image to be taken that shows the disposition of the atoms over the array. Next, the trap array (e.g., optical tweezers) are switched off and a pulse is sent with the plurality of electromagnetic fields (e.g., the blue and red Rydberg lasers mentioned before) for a precise duration determined based on the Rabi frequency (e.g., a few microseconds), and the tweezers are switched back on. Finally, a second fluorescence image of the recaptured atoms is recorded.

If a given atom emit fluorescence light on the second fluorescence image then the atom is present at the time of the second fluorescence image, one can infer that this given atom was in the ground state at the time of the second fluorescence image. Instead, if the atom is absent, the inference is that the atom was in the Rydberg state at that time

This way, running these Rabi measurements systematically from short to long pulses, it is observed that the atom population in the Rydberg (and inversely in the ground) state oscillates as a function of the pulse length at a certain frequency, the effective Rabi frequency. This frequency depends on the intensity of the electromagnetic field, and is therefore typically slightly different for the particles in the particle array. A pulse with a length equal to half the period of the Rabi oscillation results in a maximum number of particles being excited.

Although there are many realizations that can be explored with this kind of experiments, in general, it will always involve similar strategies to the one for the Rabi oscillations. In this disclosure, it is generally assumed that the time of a full measurement cycle ranges from tens to hundreds of milliseconds, and needs to be repeated many times in order to accumulate statistics and finally be able to extract the average probabilities of the atom populations, either in the ground or Rydberg state.

An optional step **310** comprises adjusting one or more of the plurality of electromagnetic fields, based on the determined interaction parameters; e.g., re-aligning a laser based on the associated single-photon Rabi frequency distribution.

Assuming that the source of the intensity variation is the alignment of the electromagnetic fields on the atoms, the described procedure is able to identify, and correct, the misalignment of each individual electromagnetic field. By extracting experimental parameters for the set of electromagnetic fields, via interrogating the atoms through spectroscopy, multi-photon Rabi and Ramsey frequency measurements, it is possible to obtain the light shifts that each single-photon transition experiences due to the presence of each electromagnetic field to be aligned. This, together with the knowledge of the detuning of the respective electromagnetic field with respect to the transition that it drives, allows to deduce the single-photon Rabi frequency (and consequently, the intensity) of each electromagnetic field of interest.

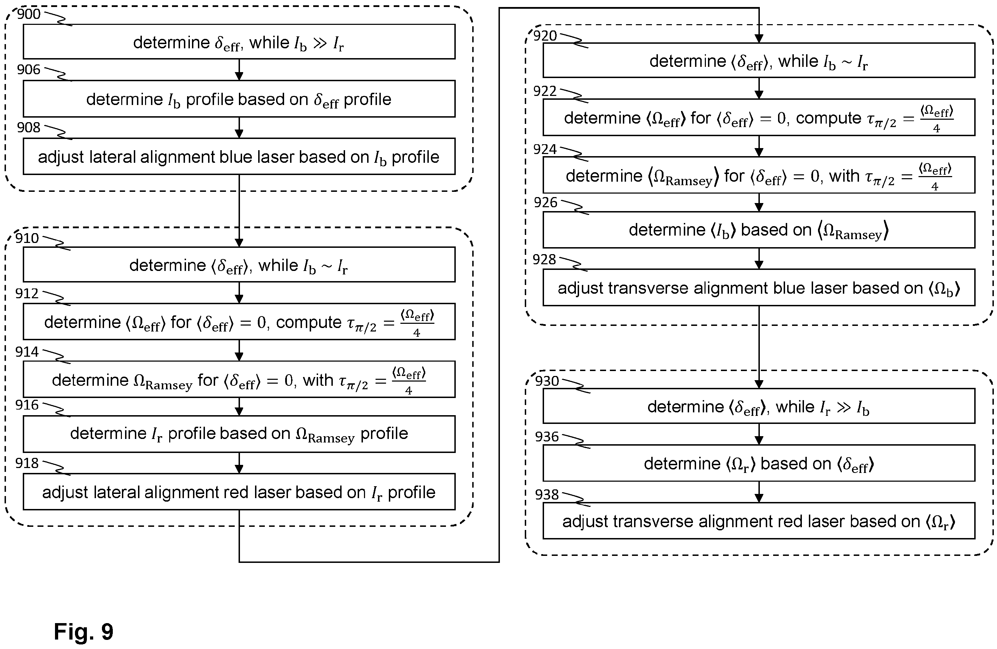

For example, a laser beam (or other electromagnetic field) may be moved relative to the particle array, and the measurements repeated, to maximize the single-photon Rabi frequency associated with the laser beam being aligned. Typically, a lateral alignment may be performed in a single step based on a spatial profile of the single-photon Rabi frequency in the lateral direction, whereas a perpendicular alignment may require more adjustment steps, but only requires determination of an average single-photon Rabi frequency rather than a spatial profile of the single-photon Rabi frequency. A more detailed description of an alignment scheme is discussed below with reference to **Fig. 9.**

**Fig. 4A** schematically depicts a method for performing a spectroscopy measurement. It is assumed the particle array has been loaded with particles. A first step **402** comprises scanning the effective detuning, or $N$-photon detuning, by changing the wavelength (or equivalently, frequency) of one or more of the electromagnetic fields. It depends on the properties of the hardware used which one or more of the electromagnetic fields can most easily be adjusted.

A step **404** comprises providing a pulse with all electromagnetic fields. As the electromagnetic fields used for, e.g., trapping the particles and imaging the particles are typically switched off when the (excitation) pulses are provided, they are not taken into consideration here. Thus, when reference is made to "all" electromagnetic field, this refers to the N electromagnetic fields that drive the transition from the ground state to the Rydberg state. A typical example of such a pulse is shown in **Fig. 4B.** In practice, overlapping pulses with different durations may be used; the pulse duration is then the duration during which all electromagnetic fields are turned on. The pulse may have a duration that is close to half the (average) effective Rabi period (the exact value of which is typically experimentally unknown at this point in the process).

In the example shown in **Fig. 4B,** first the imaging field is turned off, and subsequently the traps are turned off, so as to avoid interference between the imaging and trap fields on the one hand and the pulse fields on the other hand. In this example, a 250 ns pulse is provided by the red and blue Rydberg lasers. The red laser is switched on about 50 ns before the blue laser and switched off about 50 ns after the blue laser. Although shown here as a step function, in practice, a pulse may have a smoother rise and fall-off, which can be of the order of 10s of nanoseconds to reach the full intensity. After the pulse, the traps and imaging fields are switched on again.

After the pulse has been provided, a step **406** comprises detecting the particles that are in the ground state and/or the particles that are in the excited state, e.g., using fluorescence imaging as described above. As is known in the art, steps **404** and **406** may be repeated as often as necessary (with identical pulses) to obtain robust statistics about a probability that each of the particles is in the excited or ground state after measurement. When only an average value is needed, all particles may be used to determine a global excitation probability, rather than an individual excitation probability for each particle. This drastically reduces the number of required repetitions of steps **404-406.**

Once the probability that a particle is in the excited state after the measurement has been determined, a step **408** comprises changing the pulse frequency of at least one of the electromagnetic fields, and repeating the steps **404** and **406**. Depending on the implementation, it may be sufficient to determine only the average effective detuning; while other implementations may require determining the effective detuning for each individual particle.

Steps **404-408** may be repeated as often as necessary to find the pulse frequency at which the maximum number of particles is excited. For example, a 'sweep' frequency scan may be performed using a fixed frequency change over a predetermined interval. An example of such a measurement is shown in **Fig. 4C.** In other examples, an optimisation algorithm may be used to determine the frequency change of the Rydberg lasers. Based on the measurements, in a step **410,** an average effective detuning $\langle \delta_{\mathrm{eff}} \rangle$ is determined, e.g., by determining an optimal excitation frequency.

In the example shown in **Fig. 4C,** an analytical function describing the excitation probability is fitted to the measured excitation probabilities (here plotted as $1 - P_{\mathrm{excited}}$, i.e., the probability that a particle is not excited to the Rydberg state), and an extremum of the fitted probability distribution is determined to obtain the detuning such that $\langle \delta_{\mathrm{eff}} \rangle = 0$; in this case, $v_{\mathrm{fit}} = 305.926$ MHz.

A step **412** comprises adjusting the frequency of at least one of the electromagnetic fields such that the average effective detuning is substantially zero.

**Fig. 5A** schematically depicts a method for measuring an effective Rabi frequency, also known as a multi-photon Rabi-frequency, typically averaged over all particles. It is assumed the optical traps array is loaded with particles. A first step **502** comprises scanning the N-photon pulse duration.

A step **504** comprises providing a pulse with all electromagnetic fields. A typical example of such a pulse is shown in **Fig. 5B.** Again, in practice, overlapping pulses with different durations may be used; the pulse duration is then the duration during which all electromagnetic fields are turned on.

In the example shown in **Fig. 5B,** first the imaging field is turned off, and subsequently the traps are turned off, so as to avoid interference between the imaging and trap fields on the one hand and the pulse fields on the other hand. In this example, a 500 ns pulse is provided by the red and blue Rydberg lasers. The red laser is switched on about 50 ns before the blue laser and switched off about 50 ns after the blue laser. After the pulse, the traps and imaging fields are switched on again. When more electromagnetic fields are used, they may be switched on and off in an analogous 'towered' way.

After the pulse has been provided, a step **506** comprises detecting the particles that are in the ground state and/or the particles that are in the excited state after measurement, e.g., using fluorescence imaging as described above. As is known in the art, steps **504** and **506** may be repeated as often as necessary (with identical pulses) to obtain robust statistics about a probability that each of the particles is in the excited or ground state. Again, when only an average value is needed (as is typically the case), all particles may be used to determine a global excitation probability, rather than an individual excitation probability for each particle. This drastically reduces the number of required repetitions of steps **504-506**.

Once the average probability that a particle is in the excited state has been determined, a step **508** comprises changing the pulse duration of the electromagnetic fields pulse, and repeating the steps **504** and **506**.

Steps **504-508** may be repeated as often as necessary to find the pulse duration at which the maximum number of particles is excited. For example, a 'sweep' scan may be performed using a fixed duration change over a predetermined interval. In other examples, an optimisation algorithm may be used to determine the frequency change of the Rydberg lasers. Based on the measurements, the effective Rabi frequency may be determined. Depending on the implementation, the effective Rabi frequency may be determined my by identifying one or more periods, or by identifying the first maximum, or in any other suitable way, such as fitting the data.

A step **510** comprises determining the effective Rabi frequency $\Omega_{\text{eff}}$, e.g., by fitting the data. Depending on the implementation, it may be sufficient to determine only the average effective Rabi frequency $\langle \Omega_{\text{eff}} \rangle$, averaged over all particles.

A step **512** comprises determining a pulse duration for a $\pi/2$-pulse, e.g., by computing $\tau_{\pi/2} = \langle \Omega_{\text{eff}} \rangle/4$.

**Fig. 6A** schematically depicts a method for measuring a single-photon Ramsey frequency. It is assumed the optical traps array is loaded with particles.

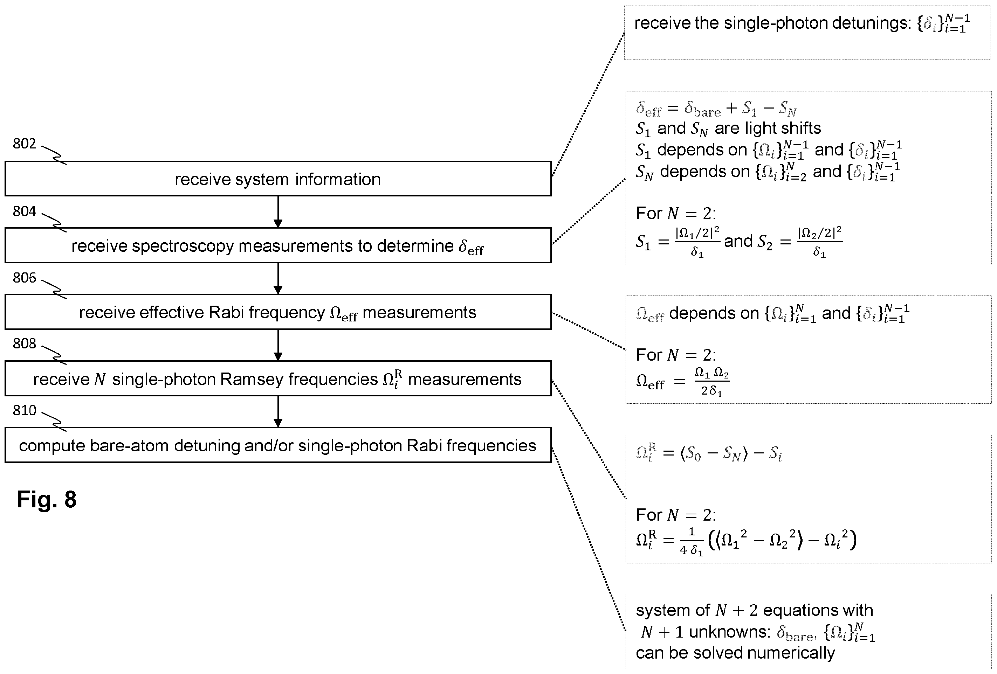

A step **602** comprises selecting a first electromagnetic field, which may be labelled with an index $i$ = 1. A step **604** comprises scanning the free-precession duration $\tau_i^{\text{FP}}$ during which the selected electromagnetic field is turned off. A step **616** comprises determining the Ramsey frequency $\Omega_i^{\text{R}}$ associated with the selected electromagnetic field EM$_i$ for all individual atoms. A step **618** comprises determining whether the Ramsey frequency associated with a next electromagnetic field should be measured (i.e., a measurement of the Ramsey frequency with the next electromagnetic field turned off), and if so, selecting, in a step **620**, a next electromagnetic field to switch off, which may be labelled with an index $i$ + 1. As will be explained in more detail below with reference to **Fig. 8**, it may be sufficient to perform one single-photon Ramsey frequency measurement less than the number of electromagnetic fields under consideration, i.e., if there are $N$ electromagnetic fields, it may be sufficient to perform the single-photon Ramsey frequency measurement for only $N$ - 1 of them.

Scanning **604** the free-precession duration $\tau_i^{\text{FP}}$ for the selected electromagnetic field comprises providing **606** a first $\pi/2$-pulse with all electromagnetic fields, waiting **608** for the free-precession duration $\tau_i^{\text{FP}}$ with only the selected electromagnetic field turned off (and all other $N$ - 1 electromagnetic fields switched on), and providing **610** a second $\pi/2$-pulse with all electromagnetic fields on. After this pulse sequence, a step **612** comprises detecting the particles that are in the excited state (or that are in the ground state) after the measurement. Again, steps **606-612** may be repeated as often as necessary to obtain robust excitation statistics. The excitation probability may be determined for each individual particle.

Once the excitation probability has been determined for all particles, the free-precession duration $\tau_i^{\text{FP}}$ for the selected electromagnetic field is changed in a step **614**.

**Fig. 6B** depicts an example of a single-photon Ramsey experiment. The Ramsey frequency corresponds to the oscillation frequency of the population of excited atoms, similar to the Rabi frequency. However, in a Ramsey experiment, a $\pi/2$-pulse is applied, followed by a variable time interval $\tau^{\text{FP}}$, and then a second $\pi/2$-pulse is applied. This measures the phase accumulated by the atoms between the two pulses. This accumulated phase corresponds to the time $\tau^{\text{FP}}$ multiplied by the absolute value of the difference between the detuning during the free precession time, $\delta_{\text{FP}}$, and the detuning during the first pulse $\pi/2$, $\delta_{\text{eff}}$, as follows: $\Omega_{\text{b}}^{\text{R}} = |\delta_{\text{FP}} - \delta_{\text{eff}}|$ .

In the example depicted in **Fig. 6B** (top), solid black arrows indicate the final state of the illustrated step, dashed grey arrows indicate the initial state (corresponding to the final state of the previous step), and dotted black arrows indicate the change from the initial state to the final state during the illustrated step. Dash-dotted line indicate the axes of rotation.

The particles are first initialized on the north pole of the Bloch sphere (positive $z$-axis), corresponding to the 10) state. The first $\pi/2$-pulse then places the state vector on the equator, on the positive $x$-axis, by rotating over $\pi/2$ around the positive $y$-axis. Once there, the particles accumulate phase during the free-precession time, rotating horizontally along the equatorial ($x,y$) plane around the $z$-axis, until the second $\pi/2$ pulse takes place, causing a second rotation of $\pi/2$ around the

positive *y*-axis. The resulting position on the Bloch sphere depends on the amount of precession during the free precession time. Finally, a projective measurement indicates which part of the particle population is in the excited (Rydberg) state after the measurement. Scanning the free precession time $\tau^{FP}$ leads to an oscillatory behaviour (magnitude of the state) at Ramsey frequency $\Omega^R$, corresponding to the precession rate.

In order to make this method sensitive to only one of the electromagnetic fields, only one of them is switched off during the free precession time In this example, the red laser exhibits a rectangular pulse envelope over the period during which the blue laser Ramsey pulses are taking place, and off elsewhere. The effective detuning takes three main values during the cycle: $\delta_1$ (all lasers off), 0 (all lasers on), and during $\tau^{FP}$: $\delta_{FP} = \delta_{eff} - S_i$, where $S_i$ is the light shift caused by the $i^{th}$ electromagnetic field. In the depicted two-photon case, the resulting 'blue' Ramsey frequency is given by:

$$\Omega_b^R = \delta_{FP} - \delta_{eff} = \left|\frac{\Omega_r^2}{4\Delta} - \frac{\Omega_b^2}{4\Delta}\right| - \frac{\Omega_r^2}{4\Delta} \qquad (11)$$

where $\delta_{FP} = \delta_{eff} - \omega_b$. It is noted that while it is assumed that $\langle\delta_{eff}\rangle = 0$ (because of step **412**), this does not imply that $\delta_{eff} = 0$ for all particles.

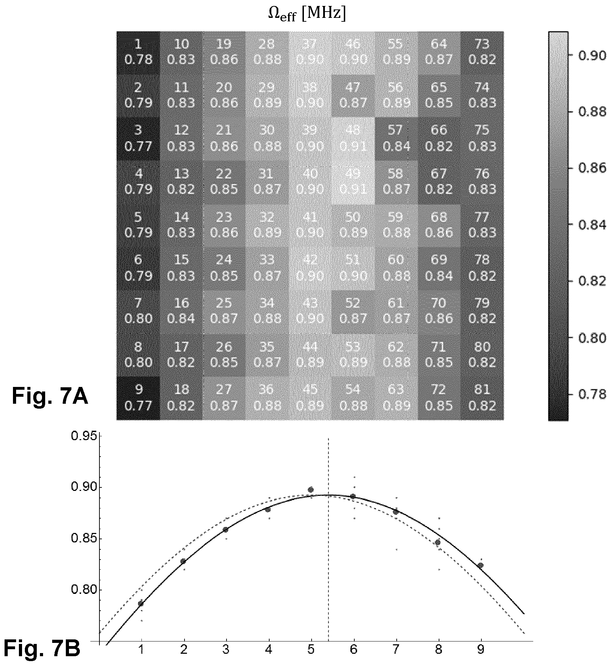

**Fig. 7A** depicts a heatmap of the effective Rabi frequency. Each square represents a single particle. In other embodiments, averages over clusters of particles may be used to reduce the measurement time while still obtaining spatial information with sufficient detail.

**Fig. 7B** provides an average per 'column', and a fitted Gaussian profile representing the laser profile. If the laser beam were perfectly aligned, the top of the Gaussian profile should be exactly in the centre of the array (middle of column 5); instead, the centre is at about 5.4. Hence, the laser beam should be adjusted (in a direction parallel to the plane holding the particles) so that the maximum coincides with the centre of the middle column.

If the array of particles is a three-dimensional array, a similar heatmap can be constructed in a second direction, perpendicular to the shown heatmap, that can be used to align the electromagnetic field in the perpendicular direction. In case the particle array is a two-dimensional array, misalignment of the electromagnetic field in the perpendicular direction will lead to a lower field intensity for all sites in the array, and hence to a lower Rabi frequency for all particles. Thus, for the perpendicular alignment, it suffices to determine an average single-photon Rabi frequency (which requires fewer repetitions to obtain sufficient statistics). The optimal alignment can then be determined by changing the alignment of an electromagnetic field and determining the average Rabi frequency associated with that field. Any known suitable optimisation algorithm may be used to determine the alignment that maximises the average single-photon Rabi frequency, and hence the (average) field intensity.

**Fig. 8** is a flowchart of a method according to an embodiment. A first step **802** comprises receiving system information. The system is configured to contain an array of multiple particles being associated with a plurality of states comprising a ground state, an excited state, and one or more intermediate states, for example as described above with reference to **Fig. 2A-C**. The system is further configured to generate a plurality of electromagnetic fields for interacting with the multiple particles. Each of the electromagnetic fields is associated with a transition between two states from the plurality of states. The system information comprises a set of single-photon detunings $\{\delta_i\}_{i=1}^{N-1}$ associated with the electromagnetic fields and the associated transitions. The first transition refers to the transition from the ground state to the lowest intermediate state, and the last transition refers to the transition from the highest intermediate state to the excited state. The terms first/last light shift, first/last Rabi frequency, et cetera, are used analogously.

A step **804** comprises receiving spectroscopy measurements allowing to determine an effective detuning $\delta_{eff}$. The effective detuning may depend on a bare detuning $\delta_{bare}$, on a first light shift $S_1$ associated with a first electromagnetic field, and on a last light shift $S_N$ associated with a last electromagnetic field, e.g., $\delta_{eff} = \delta_{bare} + S_1 - S_N$. The first and last light shifts may both depend on the single-photon detuning associated with the intermediate states, i.e., . The first light shift may further depend on all single-photon Rabi frequencies except the last single-photon Rabi frequency, i.e., $\{\Omega_i\}_{i=1}^{N-1}$, and the last light shift may further depend on all single-photon Rabi frequencies except the first single-photon Rabi frequency, i.e., $\{\Omega_i\}_{i=2}^{N}$. This step may comprise controlling the system to obtain the spectroscopy measurements. This step may comprise configuring the system such that the average effective detuning, averaged over all particles, equals zero, i.e. $\langle\delta_{eff}\rangle = 0$.

A step **806** comprises receiving effective Rabi frequency $\Omega_{eff}$ measurements. The effective Rabi frequency $\Omega_{eff}$ may depend on all single-photon Rabi frequencies, and on the single-photon detunings associated with the intermediate states, i.e., $\{\delta_i\}_{i=1}^{N-1}$. In some embodiments, only an average effective Rabi frequency $\langle\Omega_{eff}\rangle$ is received. This step may further comprise determining a $\pi/2$-pulse length $\tau_{\pi/2}$ based on the effective Rabi frequency, e.g., $\tau_{\pi/2} = 1/(4\langle\Omega_{eff}\rangle)$. This step may also comprise configuring the system to use a pulse length equal to the $\pi/2$-pulse length $\tau_{\pi/2}$.

A step 808 comprises receiving at least $N - 1$ single-photon Ramsey frequency $\Omega_i^{\mathrm{R}}$ measurements. In embodiments wherein the effective Rabi frequency has not been received for all individual particles, all single-photon Ramsey frequencies may be received. The single-photon Ramsey frequency $\Omega_i^{\mathrm{R}}$ may depend on all single-photon Rabi frequencies and on the single-photon detunings associated with the intermediate states.

A step **810** comprises computing the bare-atom detuning $\delta_{\mathrm{bare}}$ and/or the single-photon Rabi frequencies $\{\Omega_i\}_{i=1}^{N}$ based on the received measurements.

**Fig. 9** is a flowchart of a method for aligning two lasers according to an embodiment. The method may be sued to align the red and blue lasers of a system as described with reference to **Fig. 2A.** Typically, the two Rydberg lasers are counterpropagating. Although the following is described with reference to a blue and red laser, this is only done to improve legibility; other embodiments may use different wavelengths. The red laser may be read as "first electromagnetic field" and the blue laser may be read as "second electromagnetic field". Furthermore, the blocks **900-908, 910-918, 920-928, 930-938** may be executed in any sequence.

A first step **900** comprises determining an effective detuning profile $\delta_{\mathrm{eff}}$ whilst an intensity of the blue laser is much larger than an intensity of the red laser, i.e., $I_{\mathrm{b}} \gg I_{\mathrm{r}}$, where $I_{\mathrm{b}}$ and $I_{\mathrm{r}}$ refer to the respective intensities of the blue and red laser beams. This step may comprise scanning a frequency of at least one of the lasers and repeatedly measuring the atoms in the excited state. This ensures that $\Omega_{\mathrm{b}} \gg \Omega_{\mathrm{r}}$ and that $\omega_{\mathrm{b}} \gg \omega_{\mathrm{r}}$. In particular, the combination of eqs. (9) and (10) yields:

$$\delta_{\mathrm{eff}} = \delta_{\mathrm{bare}} + \frac{\Gamma^2}{8\,\Delta}\frac{I_{\mathrm{b}}}{I_{\mathrm{sat}}} + \frac{\Gamma^2}{8\,\Delta}\frac{I_{\mathrm{r}}}{I_{\mathrm{sat}}} \tag{12}$$

Hence, ensuring that $I_{\mathrm{b}} \gg I_{\mathrm{r}}$ causes the 'high-blue $\delta_{\mathrm{eff}}$' profile to be substantially similar to the $I_{\mathrm{b}}$ profile. Thus, a step **906** comprises determining (e.g., plotting) the $I_{\mathrm{b}}$ profile based on the high-blue $\delta_{\mathrm{eff}}$ profile. A step **908** comprises adjusting the lateral alignment of the blue Rydberg laser, based on the determined intensity profile and, possibly, a comparison with a known laser beam profile of the blue laser.

A step **910** comprises performing a new "spectroscopy scan", with both lasers at their normal intensities (typically, $I_{\mathrm{b}} \sim I_{\mathrm{r}}$,) to obtain an average value $\langle \delta_{\mathrm{eff}} \rangle$, and adjusting a frequency of at least one of the lasers such that $\langle \delta_{\mathrm{eff}} \rangle = 0$.

A step **912** comprises measuring the average effective Rabi frequency $\langle \Omega_{\mathrm{eff}} \rangle$ by applying pulses of different pulse length and repeatedly measuring the state for each site. This step further comprises determining a $\pi/2$-pulse duration: $\tau_{\pi/2} = 1/(4\langle \Omega_{\mathrm{eff}} \rangle)$. and setting a blue laser pulse duration to the determined $\pi/2$-pulse duration.

A step **914** comprises perform red-laser Ramsey measurements. This step comprises turning on the red laser, providing a pulse with pulse duration $\tau_{\pi/2}$ with the blue laser (with the red laser still on), waiting some time (with the red laser still on), and again providing a pulse with the blue laser with pulse duration $\tau_{\pi/2}$. This procedure may be repeated a number of times to measure, site-by-site, a probability that an atom is in the excited state. This allows for the obtention of the Ramsey frequency $\Omega_{\mathrm{Ramsey}}$:

$$\Omega_{\mathrm{Ramsey}} = \delta_{\mathrm{FP}} - \delta_{\mathrm{eff}} = \left(\frac{\Omega_{\mathrm{r}}^2}{4\Delta} - \frac{\Omega_{\mathrm{b}}^2}{4\Delta}\right) - \frac{\Omega_{\mathrm{r}}^2}{4\Delta} \tag{13}$$

where $\delta_{\mathrm{FP}} = \delta_0 + \omega_{\mathrm{r}}$.

A step **916** comprises determining an intensity profile for the red laser, based on the Ramsey frequency profile (typically via a red Rabi frequency profile). A step **918** comprises adjusting the lateral alignment of the red Rydberg laser, based on the determined intensity profile and, possibly, a comparison with a known laser beam profile of the red laser.

Steps **920-922** are a repetition of steps **910-912.** If no realignment was necessary in step **918,** these steps may be skipped. A step **914** comprises determining an average Ramsey frequency $\langle \Omega_{\mathrm{Ramsey}} \rangle$. The plurality of atoms may be used as the averaging ensemble, and hence, a single measurement (per waiting period) may suffice to determine an (average) probability an atom is in excited state.

A step **926** comprises determining an average intensity for the blue laser, based on the average Ramsey frequency (typically via an average blue Rabi frequency). The average Rabi frequency for the blue laser $\langle \Omega_{\mathrm{b}} \rangle$ (and hence, the average intensity) can be derived directly from the average Ramsey frequency via:

$$\langle \Omega_{\mathrm{Ramsey}} \rangle = -\left\langle \frac{\Omega_{\mathrm{b}}^2}{4\Delta} \right\rangle = \frac{\Gamma^2}{8\,\Delta}\left\langle \frac{I_{\mathrm{b}}}{I_{\mathrm{sat}}} \right\rangle \tag{14}$$

A step **918** comprises adjusting the perpendicular alignment of the blue Rydberg laser, based on the determined intensity profile and, possibly, a comparison with a known laser beam profile of the blue laser.

Steps **930-938** are essentially repetitions of steps **900-908,** except with the roles of the red and blue lasers reversed, i.e., the average effective detuning $\langle \delta_{\text{eff}} \rangle$ is obtained whilst ensuring $I_{\text{r}} \gg I_{\text{b}}$, resulting in a 'high-red $\langle \delta_{\text{eff}} \rangle$', averaged over all atom sites. Determining (e.g., plotting) the profile of $\langle \delta_{\text{eff}} \rangle$ (and hence, $\langle \Omega_{\text{r}}^2 \rangle$ and $\langle I_{\text{r}} \rangle$) and comparing with the known laser beam profile provides the perpendicular misalignment of the red laser.

As described with reference to **Fig. 9,** four (partial) alignment methods may be distinguished:

1) lateral alignment based on an intensity profile using a 'dominant' intensity (as shown in steps **900-908**);
2) transverse alignment based on an average intensity using a 'dominant' intensity (as shown in steps **930-938**);
3) lateral alignment based on an intensity profile using a Ramsey measurement (as shown in steps **910-918**); and
4) transverse alignment based on an average intensity using a Ramsey measurement (as shown in steps **920-928**).

Naturally, instead of an intensity profile or an average intensity, a Rabi frequency profile or average Rabi frequency may be used.

For each electromagnetic field to be aligned, at least a lateral alignment and a transverse alignment should be performed. Moreover, for each electromagnetic field to be aligned, at least one Ramsey measurement must be performed, in order to decouple the general effective Rabi frequency from the single-photon Rabi frequency. It may be advantageous to use an alignment using a dominant intensity for the other alignment direction, as an alignment using a dominant intensity is typically more efficient (faster) than one based on a Ramsey measurement. The choice which of the lateral alignment and the transverse alignment is based on the Ramsey measurement, may depend on the details of the optical system, which is typically shared at least in part between the multiple electromagnetic fields; and a preference for which electromagnetic field(s) is/are switched during the Ramsey measurement, which may be informed by other operational aspects not directly related to the alignment.

For completeness' sake, it is noted that when generalizing the alignment to $N$ electromagnetic fields, it is necessary to determine all Ramsey frequencies $\Omega_i^{\text{R}}$, i.e., to perform $N$ - 1 measurements in which in each one it is a different electromagnetic field that is switched. In other words, there are $N$ - 1 heatmaps in which it is possible to identify: on the one hand the alignment of the non-switched electromagnetic fields (all together), by the pattern shown by the heatmap; and on the other hand, the alignment of the switched laser, by the average Ramsey frequency. This is analogous to the case of $N$ = 2, by simply binarizing into 2 groups of electromagnetic fields (one of which groups preferably comprises only one electromagnetic field). Moreover, such a system is overdetermined, since just as the blue laser can be identified with a first of the $N$ electromagnetic fields and the red laser with the other $N$ - 1 electromagnetic fields, the opposite can equally be done: identifying the red laser with the first electromagnetic field and the blue laser with the other $N$ - 1 electromagnetic fields. In other words, it is also possible to switch $N$ - 1 electromagnetic fields and get the information of the remaining one (first) electromagnetic fields, thanks to the pattern shown by the heatmap and vice versa.

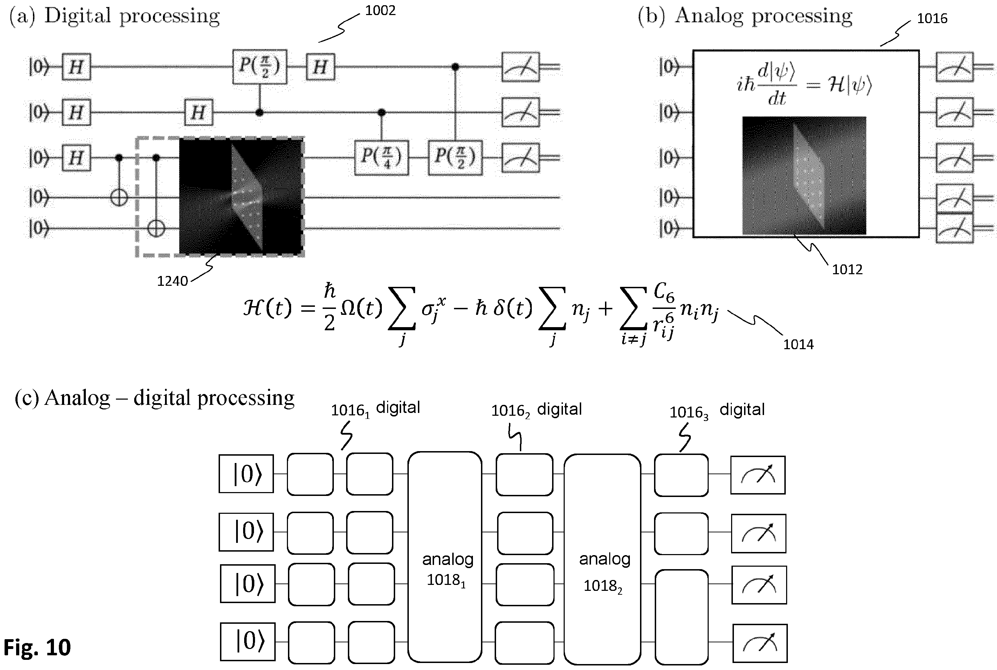

**Fig. 10** is a hardware-level schematic of the actions effectuating the logical operations of circuit diagrams, which may be executed on a neutral-atom-based quantum computer. On this type of hardware, unitary operators can be decomposed in two different kinds of operations: digital or analog. Both of these operations are transformations in the quantum Hilbert space over atomic states.

Schematic (a) of **Fig. 10** depicts a digital quantum circuit **1002,** wherein local laser pulses may be used to individually address neutral atoms to effectuate transitions between atomic states which effectively implement sets of standardized or 'digital' rotations on computational states. These digital gates may include any single-qubit operations such as rotations, Pauli gates such as Pauli-X, Pauli-Y and Pauli-Z gates or a Hadamard gate. Additionally, such digital gate operations may also include 2-qubit operations such as controlled NOT or controlled Z gates or multi-qubit operations such as Toffoli gates.

Schematic (b) of **Fig. 10** depicts an analog mode **1016** of operation, wherein a global laser light pulse may be applied to to one or more groups of atoms, or even all atoms at the same time, with certain properties like detuning, Rabi frequencies and Rydberg interactions to cause multi-qubit entanglement thereby effectively driving the evolution of a Hamiltonian **1014** of the atomic array in an analog way. The combined quantum wavefunction evolves according to Schrödinger's equation, and particular, unitary operators $\widehat{U} = \text{e}^{-\text{i}\widehat{\mathcal{H}}t}$, where $\widehat{\mathcal{H}}$ denotes the Hamiltonian and $t$ the time, can be designed by pulse-shaping the parametrised coefficients of the Hamiltonian in time. This way, a parametric analog unitary block can be applied, which entangles the atoms and can act as a variational ansatz, or a feature map, or other entanglement operation.

In schematic (b) of **Fig. 10**, the global laser light pulse may be a laser beam which is configured to expose a group of qubits or even all qubits in the quantum array. In an embodiment, the optical addressing module may be used to controllably generate a plurality of light beams to globally address a large group of qubits so that multi-qubit entanglement between the addressed qubits is achieved. To that end, one or more illumination patterns identifying the qubits that need to be optically addressed may be used by the computer to control the optical addressing module.

The digital and analog modes can be combined or alternated, to yield a combination of the effects of each. Schematic (c) of **Fig. 10** depicts an example of such digital-analog quantum circuit, including blocks $1016_{1-3}$ of digital qubit operations (single or multi-qubit) and analog blocks $1018_{1-3}$.

It can been proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital ones form a small set of pre-compiled operations, typically but not exclusively on single-qubits, while analog ones are used to evolve the system over its natural Hamiltonian, for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as neutral atom quantum computer. Entanglement can spread more quickly in terms of wall-clock runtime of a single analog block compared to a sequence of digital gates, especially when considering also the finite connectivity of purely digital devices.

Further, digital-analog quantum circuits for a neutral quantum processor that are based on Rydberg type of Hamiltonians can be differentiated analytically so that they can be used in variational and/or quantum machine learning schemes, including the differential quantum circuit (DQC) schemes as described in this application.

In order to transform the internal states of these modes, a classical control stack is used to send information to optical components and lasers. The controller may formulate the programmable unitary transformations in a parametrised way.

At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

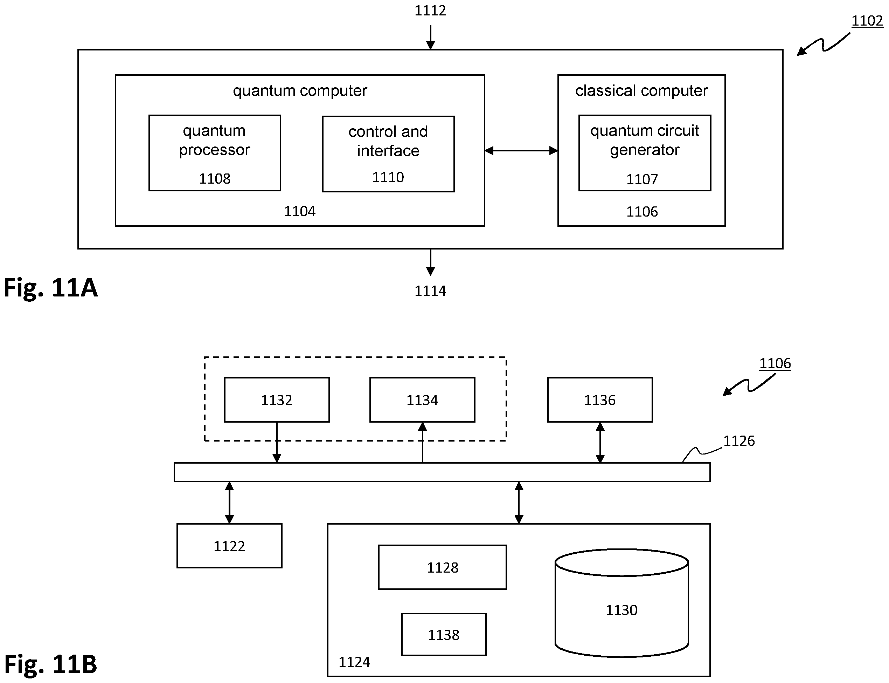

**Fig. 11A** depicts a system for determining a solution for an computational problem using a hybrid quantum computer system according to an embodiment. The system **1102** may include a quantum computer system **1104** comprising one or more quantum processors **1108,** e.g. a gate-based qubit quantum processor, and a controller system **1110** comprising input output (I/O) devices which form an interface between the quantum processor and the outside world, e.g., the one or more classical processors of a classical computer **1106.** For example, the controller system may include a system for generating control signals for controlling the quantum processing elements. The control signals may include for example a sequence of pulses, e.g. microwave pulses, voltage pulses and/or optical pulses, which are used to manipulate qubits. Further, the controller may include output device, e.g., readout circuits, for readout of the qubits and the control signals for readout of the quantum processing elements, e.g. a readout pulse for reading a qubit. In some embodiments, at least a part such readout circuit may be located or integrated with the chip that includes the qubits.

The system may further comprise a (purely classical information) input **1112** and an (purely classical information) output **1114.** The data processor systems may be configured to solve an optimization problem using the quantum computer. Input data may include information about the optimisation problem one wishes to solve. This information may include training data such as input-output pairs, a differential equation, boundary conditions, initial values, regularization values, etc. The input data may be used by the system to construct quantum circuits, in particular quantum feature maps and/or parametrized quantum circuits, and to classically calculate values, e.g. sequences of pulses, which may be used to initialize and control qubit operations according to the quantum circuit. To that end, the classical computer may include a quantum circuit generator **1107.** The input data may be used by the system to classically calculate values, e.g. parameter settings, which may be used to initialize the quantum circuit that is implemented on the quantum processor. Similarly, output data may include loss function values, sampling results, correlator operator expectation values, optimisation convergence results, optimized quantum circuit parameters and hyperparameters, and other classical data.

Each of the one or more quantum processors may comprise a set of controllable quantum processing elements, e.g. a set of controllable two-level systems referred to as qubits. The two levels are $|0\rangle$ and $|1\rangle$ and the wave function of a $N$-qubit quantum processor may be regarded as a complex-valued superposition of $2^N$ of these (distinct) basis states. The embodiments in this application however are not limited to qubits but may include any multi-level quantum processing elements, e.g. qutrits, that is suitable for performing quantum computation. Examples of such quantum processors include noisy intermediate-scale quantum (NISQ) computing devices and fault tolerant quantum computing (FTQC) devices.

The quantum processor may be configured to execute a quantum algorithm in accordance with the gate operations of a quantum circuit. The quantum processor may be implemented as a gate-based qubit quantum device, which allows initialization of the qubits into an initial state, interactions between the qubits by sequentially applying quantum gates between different qubits and subsequent measurement of the qubits' states. To that end, the input devices may be configured to configure the quantum processor in an initial state and to control gates that realize interactions between the qubits. Similarly, the output devices may include readout circuitry for readout of the qubits which may be used to determine a measure of the energy associated with the expectation value of the Hamiltonian of the system taken over the prepared state.

For example, the one or more quantum processors may comprise a neutral-atom device as described above with reference to **Fig. 10.**

In some embodiments, the first data processor system may be implemented as a software program for simulating a quantum computer system **1104** comprising a quantum processor system **1108.** Hence, in that case, the software program may be a classical software program that runs a classical computer **1106** so that quantum algorithms can be developed, executed and tested on a classical computer without requiring access to a hardware implementation of the quantum processor system.

**Fig. 11B** is a block diagram illustrating an exemplary classical data processing system described in this disclosure, for example classical computer **1106.** Classical data processing system **1120** may include at least one processor **1122** coupled to memory elements **1124** through a system bus **1126.** As such, the data processing system may store program code within memory elements **1124.** Further, processor **1122** may execute the program code accessed from memory elements **1124** via system bus **1126.** In one aspect, data processing system may be implemented as a computer that is suitable for storing and/or executing program code. It should be appreciated, however, that data processing system **1120** may be implemented in the form of any system including a processor and memory that is capable of performing the functions described within this specification.

Memory elements **1124** may include one or more physical memory devices such as, for example, local memory **1128** and one or more bulk storage devices **1130.** Local memory may refer to random access memory or other non-persistent memory device(s) generally used during actual execution of the program code. A bulk storage device may be implemented as a hard drive or other persistent data storage device. The classical data processing system **1120** may also include one or more cache memories (not shown) that provide temporary storage of at least some program code in order to reduce the number of times program code must be retrieved from bulk storage device **1130** during execution.

Input/output (I/O) devices depicted as key device **1132** and output device **1134** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **1136** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with classical data processing system **1120.**

As pictured in **FIG. 11B,** memory elements **1124** may store an application **1138.** It should be appreciated that classical data processing system **1120** may further execute an operating system (not shown) that can facilitate execution of the application. Application, being implemented in the form of executable program code, can be executed by classical data processing system **1120,** e.g., by processor **1122.** Responsive to executing application, data processing system may be configured to perform one or more operations to be described herein in further detail.

In one aspect, for example, classical data processing system **1120** may represent a client data processing system. In that case, application **1138** may represent a client application that, when executed, configures classical data processing system **1120** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1138,** when executed, may configure data processing system to perform (HTTP) server operations. In another aspect, data processing system may represent a module, unit or function as referred to in this specification.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **1002** described herein.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the embodiments in the form disclosed. Many modifications and variations will be apparent to those of ordinary skill in the art without departing from the scope and spirit of the invention. The embodiments were chosen and described in order to best explain the principles and the practical application, and to enable others of ordinary skill in the art to understand the various embodiments with various modifications as are suited to the particular use contemplated.

**Claims**

1. A method for determining interaction parameters for multiple particles, each of the multiple particles being associated with a plurality of states, the plurality of states comprising a ground state, an excited state, and one or more intermediate states, the multiple particles being configured to interact with a plurality of electromagnetic fields, each of the electromagnetic fields being associated with a transition between two states from the plurality of states, the method comprising:

   performing a spectroscopy measurement by scanning a frequency of at least one of the one or more electromagnetic fields to determine an effective detuning $\delta_{\text{eff}}$ for each of the multiple particles;
   measuring an effective Rabi frequency $\Omega_{\text{eff}}$ for each of the multiple particles by scanning a pulse duration of a pulse applied to the particles using the plurality of electromagnetic fields;
   measuring a single-photon Ramsey frequency $\Omega_i^{\text{R}}$ for each of the multiple particles for at least each electromagnetic field except one electromagnetic field by scanning a free-precession duration $\tau_i^{\text{FP}}$; and
   determining the interaction parameters based on the measured effective detuning $\delta_{\text{eff}}$, the measured effective Rabi frequency $\Omega_{\text{eff}}$, and the measured single-photon Ramsey frequencies $\Omega_i^{\text{R}}$, preferably the interaction parameters comprising a bare detuning $\delta_{\text{bare}}$ and a Rabi frequency $\Omega_i$ for each electromagnetic field.

2. The method as claimed in claim 1, further comprising: based on the determined effective detuning $\delta_{\text{eff}}$ for each of the multiple particles, adjusting the frequency of the at least one of the plurality of electromagnetic fields such that an average $\langle\delta_{\text{eff}}\rangle$ of the effective detunings $\delta_{\text{eff}}$ for the multiple particles is substantially zero, prior to the measuring of the Rabi frequency.

3. The method as claimed in claim 1 or 2, further comprising, after measuring the effective Rabi frequency $\Omega_{\text{eff}}$, repeating the spectroscopy measurement using a pulse length based on the measured effective Rabi frequency $\Omega_{\text{eff}}$ to obtain an improved effective detuning, and optionally, adjusting the frequency of the at least one of the plurality of electromagnetic fields such that an average $\langle\delta_{\text{eff}}\rangle$ of the improved effective detunings $\delta_{\text{eff}}$ for the multiple particles is substantially zero and repeating the effective Rabi frequency measurement.

4. The method as claimed in any one of the preceding claims, wherein a $\pi/2$-pulse duration $\tau_{\pi/2}$ for measuring the single-photon Ramsey frequencies $\Omega_i^{\text{R}}$ is substantially equal to one divided by four times an average $\langle\Omega_{\text{eff}}\rangle$ of the effective Rabi frequencies for the multiple particles.

5. The method as claimed in any one of the preceding claims, further comprising aligning at least one of the plurality of electromagnetic fields based on the determined interaction parameters.

6. The method as claimed in claim 5, wherein aligning the at least one of the plurality of electromagnetic fields based on the determined interaction parameters comprises fitting a profile associated with the at least one electromagnetic field to a distribution, e.g. a heatmap, of interaction parameters associated with the at least one electromagnetic field, and aligning the at least one electromagnetic field based on the fitted profile.

7. The method as claimed in any of the preceding claims, wherein determining an interaction parameter associated with a given electromagnetic field comprises causing a field strength of the given electromagnetic field interacting with the multiple particles to be much larger than a field strength of any of the plurality of electromagnetic fields other than the given electromagnetic field.

8. The method as claimed in any one of the preceding claims, wherein the particles are atoms, preferably neutral atoms in an array of optical dipole traps.

9. A controller for a quantum system, the quantum system being configured to hold multiple particles, each of the multiple particles being associated with a plurality of states, the plurality of states comprising a ground state, an excited state, and one or more intermediate states, the quantum system further being configured to generate a plurality of electromagnetic fields configured to interact with the multiple particles, each of the electromagnetic fields being associated with a transition between two states from the plurality of states, the controller being configured to:

   cause the quantum system to perform a spectroscopy measurement by scanning a frequency of at least one of the one or more electromagnetic fields to determine an effective detuning $\delta_{\text{eff}}$ for each of the multiple particles;
   cause the quantum system to measure an effective Rabi frequency $\Omega_{\text{eff}}$ for each of the multiple particles by scanning a pulse duration of a pulse applied to the particles using the plurality of electromagnetic fields;

   cause the quantum system to measure a single-photon Ramsey frequency $\Omega_i^{\text{R}}$ for each of the multiple particles for at least each electromagnetic field except one electromagnetic field by scanning a free-precession duration $\tau_i^{\text{FP}}$; and
   determine the interaction parameters based on the measured effective detuning $\delta_{\text{eff}}$, the measured effective Rabi frequency $\Omega_{\text{eff}}$, and the measured single-photon Ramsey frequencies $\Omega_i^{\text{R}}$, preferably the interaction parameters comprising a bare detuning $\delta_{\text{bare}}$ and a Rabi frequency $\Omega_i$ for each electromagnetic field.

10. The controller as claimed in claim 9, wherein the controller is further configured to perform the method steps as claimed in any one of claims 2-8.

11. A quantum system, preferably a quantum processor, the quantum system being configured to hold multiple particles, each of the multiple particles being associated with a plurality of states, the plurality of states comprising a ground state, an excited state, and one or more intermediate states, the quantum system further being configured to generate a plurality of electromagnetic fields configured to interact with the multiple particles, each of the electromagnetic fields being associated with a transition between two states from the plurality of states, the quantum system being communicatively connected to a controller, the quantum system being configured to:

   obtain spectroscopy measurement data by scanning a frequency of at least one of the one or more electromagnetic fields and provide the spectroscopy measurement data to the controller;
   obtain effective Rabi frequency data for each of the multiple particles by scanning a pulse duration of a pulse applied to the particles using the plurality of electromagnetic fields and provide the effective Rabi frequency data to the controller;
   obtain single-photon Ramsey frequency data for each of the multiple particles for at least each electromagnetic field except one electromagnetic field by scanning a free-precession duration and provide the single-photon Ramsey frequency data to the controller;
   receive alignment information from the controller; and
   align at least one of the electromagnetic fields with respect to the multiple particles.

12. A computer program product comprising software code portions configured for, when executed by a controller as claimed in claim 9, executing the method steps according to any one of claims 1-8.

13. A non-transitory computer-readable storage medium storing the computer program product as claimed in claim 12.

Fig. 1B

Fig. 1A

**Fig. 2A**

**Fig. 2B**

**Fig. 2C**

## Fig. 3

302 — providing an array with particles, e.g., atoms

304 — perform spectroscopy measurement

306 — measure effective Rabi frequency $\Omega_{\text{eff}}$

308 — measure $N$ single-photon Ramsey frequencies $\Omega_i^R$

310 — adjust electromagnetic field(s), e.g., laser alignment

**Fig. 3**

## Perform spectroscopy measurement

402 — scan the N-photon detuning
by changing frequencies of one or more EM fields

404 — provide pulse with EM fields simultaneously

406 — detect state of particles

408 — change frequencies of one or more EM fields

410 — determine effective detuning $\delta_{\text{eff}}$

412 — adjust EM fields such that $\langle \delta_{\text{eff}} \rangle = 0$

**Fig. 4A**

Spectroscopy

**Fig. 4B**

**Fig. 4C**

## Measure effective Rabi frequency $\Omega_{\mathrm{eff}}$

502 scan the N-photon pulse duration

504 provide pulse with EM fields simultaneously

506 detect state of particles

508 change pulse duration

510 determine effective Rabi frequency $\Omega_{\mathrm{eff}}$

512 determine $\pi/2$-pulse duration: $\tau_{\pi/2} = 1/(4\langle\Omega_{\mathrm{eff}}\rangle)$

**Fig. 5A**

Rabi

Imaging

Traps

1013 nm

420 nm

time [ns]

**Fig. 5B**

**Measure $N$ single-photon Ramsey frequencies $\Omega_i^R$**

602
start at $i = 1$

604
scan free-precession duration $\tau_i^{FP}$

606
provide first $\pi/2$-pulse with all EM fields

608
wait for free precession duration $\tau_i^{FP}$ with only $EM_i$ turned off

610
provide second $\pi/2$-pulse with all EM fields

612
detect state of particles

614
change wait duration

616
determine Ramsey frequency $\Omega_i^R$ for all particles

622
done

Yes

618
$i = N?$

No

620
$i \to i + 1$

**Fig. 6A**

Fig. 6B

$\Omega_{\mathrm{eff}}$ [MHz]

**Fig. 7A**

**Fig. 7B**

EP 4 715 690 A1

receive the single-photon detunings: $\{\delta_i\}_{i=1}^{N-1}$

$\delta_{\mathrm{eff}} = \delta_{\mathrm{bare}} + S_1 - S_N$
$S_1$ and $S_N$ are light shifts
$S_1$ depends on $\{\Omega_i\}_{i=1}^{N-1}$ and $\{\delta_i\}_{i=1}^{N-1}$
$S_N$ depends on $\{\Omega_i\}_{i=2}^{N}$ and $\{\delta_i\}_{i=1}^{N-1}$

For $N = 2$:
$S_1 = \dfrac{|\Omega_1/2|^2}{\delta_1}$ and $S_2 = \dfrac{|\Omega_2/2|^2}{\delta_1}$

802

**receive system information**

804

**receive spectroscopy measurements to determine $\delta_{\mathrm{eff}}$**

806

**receive effective Rabi frequency $\Omega_{\mathrm{eff}}$ measurements**

808

**receive $N$ single-photon Ramsey frequencies $\Omega_i^{\mathrm{R}}$ measurements**

810

**compute bare-atom detuning and/or single-photon Rabi frequencies**

## Fig. 8

$\Omega_{\mathrm{eff}}$ depends on $\{\Omega_i\}_{i=1}^{N}$ and $\{\delta_i\}_{i=1}^{N-1}$

For $N = 2$:
$\Omega_{\mathrm{eff}} = \dfrac{\Omega_1\,\Omega_2}{2\delta_1}$

$\Omega_i^{\mathrm{R}} = \langle S_0 - S_N \rangle - S_i$

For $N = 2$:
$\Omega_i^{\mathrm{R}} = \dfrac{1}{4\,\delta_1}\left(\langle \Omega_1{}^2 - \Omega_2{}^2 \rangle - \Omega_i{}^2\right)$

system of $N + 2$ equations with
$N + 1$ unknowns: $\delta_{\mathrm{bare}}$, $\{\Omega_i\}_{i=1}^{N}$
can be solved numerically

900
determine $\delta_{\text{eff}}$, while $I_b \gg I_r$

906
determine $I_b$ profile based on $\delta_{\text{eff}}$ profile

908
adjust lateral alignment blue laser based on $I_b$ profile

910
determine $\langle \delta_{\text{eff}} \rangle$, while $I_b \sim I_r$

912
determine $\langle \Omega_{\text{eff}} \rangle$ for $\langle \delta_{\text{eff}} \rangle = 0$, compute $\tau_{\pi/2} = \frac{\langle \Omega_{\text{eff}} \rangle}{4}$

914
determine $\Omega_{\text{Ramsey}}$ for $\langle \delta_{\text{eff}} \rangle = 0$, with $\tau_{\pi/2} = \frac{\langle \Omega_{\text{eff}} \rangle}{4}$

916
determine $I_r$ profile based on $\Omega_{\text{Ramsey}}$ profile

918
adjust lateral alignment red laser based on $I_r$ profile

920
determine $\langle \delta_{\text{eff}} \rangle$, while $I_b \sim I_r$

922
determine $\langle \Omega_{\text{eff}} \rangle$ for $\langle \delta_{\text{eff}} \rangle = 0$, compute $\tau_{\pi/2} = \frac{\langle \Omega_{\text{eff}} \rangle}{4}$

924
determine $\langle \Omega_{\text{Ramsey}} \rangle$ for $\langle \delta_{\text{eff}} \rangle = 0$, with $\tau_{\pi/2} = \frac{\langle \Omega_{\text{eff}} \rangle}{4}$

926
determine $\langle I_b \rangle$ based on $\langle \Omega_{\text{Ramsey}} \rangle$

928
adjust transverse alignment blue laser based on $\langle \Omega_b \rangle$

930
determine $\langle \delta_{\text{eff}} \rangle$, while $I_r \gg I_b$

936
determine $\langle \Omega_r \rangle$ based on $\langle \delta_{\text{eff}} \rangle$

938
adjust transverse alignment red laser based on $\langle \Omega_r \rangle$

**Fig. 9**

(a) Digital processing

(b) Analog processing

$$i\hbar\frac{d|\psi\rangle}{dt} = \mathcal{H}|\psi\rangle$$

$$\mathcal{H}(t) = \frac{\hbar}{2}\Omega(t)\sum_j \sigma_j^x - \hbar\,\delta(t)\sum_j n_j + \sum_{i\neq j}\frac{C_6}{r_{ij}^6}n_i n_j$$

(c) Analog – digital processing

Fig. 10

EP 4 715 690 A1

1112

1102

## quantum computer 1104

| quantum processor 1108 | control and interface 1110 |

## classical computer 1106

quantum circuit generator 1107

**Fig. 11A**

1114

1106

| 1132 | 1134 |

1136

1126

1122

1124

1128

1138

1130

**Fig. 11B**

Europäisches
Patentamt
European
Patent Office
Office européen
des brevets

## EUROPEAN SEARCH REPORT

**Application Number**

EP 24 30 6549

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Méhaignerie Paul: "Interactions between optically-trapped circular Rydberg atoms for quantum simulation", THÈSE DE DOCTORAT DE SORBONNE UNIVERSITÉ, 19 October 2023 (2023-10-19), XP093173990, Retrieved from the Internet: URL:https://theses.hal.science/tel-0424968 5/ * Chapters III, III.1 * ----- | 1-13 | INV. G06N10/40 G06N10/20 G06N10/60 |
| A,D | Levine Harry Jay: "Quantum Information Processing and Quantum Simulation with Programmable Rydberg Atom Arrays", PhD Thesis, 30 April 2021 (2021-04-30), XP093066586, Retrieved from the Internet: URL:https://www.proquest.com/docview/25641 65039?pq-origsite=gscholar&fromopenview=tr ue&sourcetype=Dissertations%20&%20Theses [retrieved on 2023-07-24] * Sections 3.6, 5.6, I.3 * ----- | 1-13 | |

**TECHNICAL FIELDS SEARCHED (IPC)**

G06N

The present search report has been drawn up for all claims

| Place of search | Date of completion of the search | Examiner |
|---|---|---|
| The Hague | 21 February 2025 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                           

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2024013536 A1

**Non-patent literature cited in the description**

- Quantum information processing and quantum simulation with programmable Rydberg atom arrays. **H.J. LEVINE**. Doctoral dissertation. Harvard University Graduate School of Arts and Sciences